# EUROPEAN PATENT APPLICATION

(11) **EP 4 307 748 A1**
(43) Date of publication of application: **17.01.2024**
(21) Application number: 21930201.5
(22) Date of filing: 12.03.2021
(51) Int. Cl.: H04W 16/28, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/010009
(87) International publication number: WO 2022/190349

(57) **Abstract**

A terminal according to one aspect of the present disclosure includes a receiving section that receives configuration information about a transmission configuration indication (TCI) state applicable to multiple types of channels in one or more cells, and a control section that applies the TCI state to a secondary cell, wherein the control section uses, for a quasi co-location (QCL) type D reference signal for the secondary cell, a first reference signal transmitted in a special cell, and when a second reference signal for a procedure of radio link monitoring (RLM) or beam failure detection (BFD) is not configured for the secondary cell, the control section uses the first reference signal for the procedure. According to one aspect of the present disclosure, it is possible to appropriately perform at least one of RLM and BFD.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, a terminal that performs radio link failure (radio link monitoring (RLM))/beam failure detection (BFD) is under study.

However, when a configuration/information element of a reference signal (RS) for the RLM/BFD is not provided, how the RS for the RLM/BFD is determined is indefinite. Unless the RS for the RLM/BFD is appropriately determined, monitoring accuracy/detection accuracy may deteriorate.

Thus, an object of the present disclosure is to provide a terminal, a radio communication method, and a base station that appropriately perform at least one of RLM and BFD.

### Solution to Problem

A terminal according to one aspect of the present disclosure includes a receiving section that receives configuration information about a transmission configuration indication (TCI) state applicable to multiple types of channels in one or more cells, and a control section that applies the TCI state to a secondary cell, wherein the control section uses, for a quasi co-location (QCL) type D reference signal for the secondary cell, a first reference signal transmitted in a special cell, and when a second reference signal for a procedure of radio link monitoring (RLM) or beam failure detection (BFD) is not configured for the secondary cell, the control section uses the first reference signal for the procedure.

### Advantageous Effects of Invention

According to one aspect of the present disclosure, it is possible to appropriately perform at least one of RLM and BFD.

### Brief Description of Drawings

[FIG. 1] FIG. 1 is a diagram to show an example of simultaneous beam update across a plurality of CCs.
[FIG. 2] FIGS. 2A and 2B are each a diagram to show an example of a common beam.
[FIG. 3] FIG. 3 is a diagram to show an example of QCL configuration configurable in Rel. 15/16.
[FIG. 4] FIG. 4 is a diagram to show an example of QCL configuration unconfigurable in Rel. 15/16.
[FIG. 5] FIG. 5 is a diagram to show an example of TCI state indication in a unified TCI state framework in CA.
[FIG. 6] FIG. 6 is a diagram to show an example of a QCL constraint in case 4.
[FIG. 7] FIG. 7 is a diagram to show an example of a QCL constraint in case 5.
[FIG. 8] FIG. 8 is a diagram to show an example of configuration information according to a third embodiment.
[FIG. 9] FIG. 9 is a diagram to show an example of QCL type D RS configuration according to Embodiment 4-1.
[FIG. 10] FIG. 10 is a diagram to show an example of QCL type D RS configuration according to a fifth embodiment.
[FIG. 11] FIG. 11 is a diagram to show an example of beam application time in a plurality of CCs.
[FIG. 12] FIG. 12 is a diagram to show an example of TCI state indication for a plurality of CCs by a DCI.
[FIG. 13] FIG. 13 is a diagram to show an example of the number of RLM-RSs.
[FIG. 14] FIG. 14 is a diagram to show an example of beam recovery procedure.
[FIG. 15] FIG. 15 is a diagram to show an example of common TCI state determination method 3.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is expressed as a signal/channel) based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X with a TCI state may mean an RS to have a relationship of QCL type X with (a DMRS for) a given channel/signal, and this RS may be referred to as a QCL source of QCL type X with the TCI state.

For the PDCCH and the PDSCH, a QCL type A RS may always be configured, and a QCL type D RS may be configured additionally. It is difficult to estimate a Doppler shift, a delay, and the like by using DMRS one-shot reception, and thus the QCL type A RS is used for improvement in channel estimation accuracy. The QCL type D RS is used for receive beam determination in DMRS reception.

For example, TRS 1-1, TRS 1-2, TRS 1-3, and TRS 1-4 are transmitted, and TRS 1-1 is notified as a QCL type C/D RS by a TCI state for the PDSCH. The TCI state is notified, thereby allowing the UE to use, for reception of a DMRS for the PDSCH/channel estimation, information obtained from a result of past periodic reception/measurement of TRS 1-1. In this case, a QCL source for the PDSCH is TRS 1-1, and a QCL target is the DMRS for the PDSCH.

### (Default TCI State/Default Spatial Relation/Default PL-RS)

In an RRC connected mode, in both a case where in-DCI TCI information (higher layer parameter "TCI-PresentInDCI") is set to "enabled" and a case where the in-DCI TCI information is not configured, when time offset between reception of DL DCI (DCI to schedule a PDSCH) and a corresponding PDSCH (PDSCH scheduled by the DCI) is less than a threshold value (timeDurationForQCL) (application condition, first condition), a TCI state (default TCI state) for the PDSCH may, in a case of non-cross carrier scheduling, be a TCI state with the lowest CORESET ID in the latest slot in an active DL BWP for that CC (for a specific UL signal). Otherwise, the TCI state (default TCI state) for the PDSCH may be a TCI state with the lowest TCI state ID of a PDSCH in an active DL BWP for a scheduled CC.

In Rel. 15, respective ones of a PUCCH spatial relation activation/deactivation MAC CE and an SRS spatial relation activation/deactivation MAC CE are necessary. A PUSCH spatial relation follows an SRS spatial relation.

In Rel. 16, at least one of the PUCCH spatial relation activation/deactivation MAC CE and the SRS spatial relation activation/deactivation MAC CE may not be used.

If both a spatial relation and a PL-RS for a PUCCH are not configured in FR2 (application condition, second condition), default assumption for the spatial relation and PL-RS (default spatial relation and default PL-RS) is applied to the PUCCH. If both a spatial relation and a PL-RS for an SRS (SRS resource for the SRS or SRS resource corresponding to SRI in DCI format 0_1 to schedule a PUSCH) are not configured in FR2 (application condition, second condition), default assumption for the spatial relation and PL-RS (default spatial relation and default PL-RS) is applied to the PUSCH scheduled by DCI format 0_1, and the SRS.

If CORESETs are configured in an active DL BWP on that CC (application condition), the default spatial relation and the default PL-RS may be a TCI state or QCL assumption for a CORESET having the lowest CORESET ID in the active DL BWP. If CORESETs are not configured in the active DL BWP on that CC, the default spatial relation and the default PL-RS may be an active TCI state having the lowest ID of a PDSCH in the active DL BWP.

In Rel. 15, a spatial relation for a PUSCH scheduled by DCI format 0_0 follows a spatial relation for a PUCCH resource having the lowest PUCCH resource ID, out of active spatial relations for PUCCHs on the same CC. A network needs to update PUCCH spatial relations on all SCells even when the PUCCH is not transmitted on the SCells.

In Rel. 16, PUCCH configuration for the PUSCH scheduled by DCI format 0_0 is unnecessary. When an active PUCCH spatial relation or a PUCCH resource for the PUSCH scheduled by DCI format 0_0 is absent on an active UL BWP in that CC (application condition, second condition), the default spatial relation and the default PL-RS are applied to the PUSCH.

A condition for application of the default spatial relation/default PL-RS for the SRS may include a case that an information element for enabling a default beam pathloss for the SRS (higher layer parameter "enableDefaultBeamPlForSRS") is set to "enabled." A condition for application of the default spatial relation/default PL-RS for the PUCCH may include a case that an information element for enabling a default beam pathloss for the PUCCH (higher layer parameter "enableDefaultBeamPlForPUCCH") is set to "enabled." A condition for application of the default spatial relation/default PL-RS for the PUSCH scheduled by DCI format 0_0 may include a case that an information element for enabling a default beam pathloss for the PUSCH scheduled by DCI format 0_0 (higher layer parameter "enableDefaultBeamPlForPUSCH0_0") is set to "enabled."

The above-described threshold value may be referred to as a time length (time duration) for QCL, "timeDurationForQCL," "Threshold," "Threshold for offset between a DCI indicating a TCI state and a PDSCH scheduled by the DCI," "Threshold-Sched-Offset," a schedule offset threshold value, a scheduling offset threshold value, or the like.

### (Multiple TRPs)

For NR, one or a plurality of transmission/reception points (TRPs) (multiple TRPs (multi TRP (MTRP))) that perform DL transmission to a UE by using one or a plurality of panels (multiple panels) are under study. Also, the UE that performs UL transmission to one or the plurality of TRPs by using one or a plurality of panels is under study.

Note that the plurality of TRPs may correspond to the same cell identifier (ID), or may correspond to different cell IDs. The cell ID may be a physical cell ID, or may be a virtual cell ID.

The multiple TRPs (for example, TRP #1 and TRP #2) may be connected to each other by an ideal/non-ideal backhaul, and information, data, and the like may be exchanged. From respective TRPs of the multiple TRPs, different code words (CWs) and different layers may be transmitted. As a form of multi-TRP transmission, non-coherent joint transmission (NCJT) may be used.

In the NCJT, for example, TRP #1 performs modulation mapping and layer mapping for a first code word to transmit a first number of layers (for example, 2 layers) and to transmit a first PDSCH by using first precoding. Also, TRP #2 performs modulation mapping and layer mapping for a second code word to transmit a second number of layers (for example, 2 layers) and to transmit a second PDSCH by using second precoding.

Note that a plurality of PDSCHs (multiple PDSCHs) subject to the NCJT may be defined as PDSCHs partially or fully overlapping with each other in relation to at least one of time and frequency domains. That is, a first PDSCH from a first TRP and a second PDSCH from a second TRP may overlap with each other in at least one of time and frequency resources.

It may be assumed that these first PDSCH and second PDSCH are not in a quasi-co-location (QCL) relationship (not quasi-co-located). Reception of the multiple PDSCHs may be interpreted as simultaneous reception of PDSCHs other than a given QCL type (for example, QCL type D) .

A plurality of PDSCHs (which may be referred to as multiple PDSCHs) from the multiple TRPs may be scheduled by using a DCI (single DCI, single PDCCH) (single master mode, multiple TRPs based on single DCI (single-DCI based multi-TRP)). A respective plurality of PDSCHs from the multiple TRPs may be scheduled by using DCIs (multiple DCI, multiple PDCCHs) (multi-master mode, multiple TRPs based on multiple DCI (multi-DCI based multi-TRP)).

For URLLC for multiple TRPs, support for repetition of a PDSCH (transport block (TB) or code word (CW)) across the multiple TRPs is under study. Support for repetition schemes (URLLC schemes, for example, schemes 1, 2a, 2b, 3, and 4) across the multiple TRPs on a frequency domain, a layer (spatial) domain, or a time domain is under study. In scheme 1, multiple PDSCHs from the multiple TRPs are space division multiplexed (SDMed). In schemes 2a and 2b, PDSCHs from the multiple TRPs are frequency division multiplexed (FDMed). In scheme 2a, redundancy versions (RVs) for the multiple TRPs are the same. In scheme 2b, the RVs for the multiple TRPs may be the same, or may be different from each other. In schemes 3 and 4, multiple PDSCHs from the multiple TRPs are time division multiplexed (TDMed). In scheme 3, the multiple PDSCHs from the multiple TRPs are transmitted in one slot. In scheme 4, the multiple PDSCHs from the multiple TRPs are transmitted in different slots.

According to such a multi-TRP scenario, more flexible transmission control using a channel with satisfactory quality is possible.

In order to support intra-cell (having the same cell ID) and inter-cell (having different cell IDs) multi-TRP transmissions based on multiple PDCCHs, in RRC configuration information for linking a plurality of pairs of PDCCHs and PDSCHs having multiple TRPs, one control resource set (CORESET) in PDCCH configuration information (PDCCH-Config) may correspond to one TRP.

The UE may judge that the multiple TRPs are multiple TRPs based on multiple DCI when at least one of condition 1 and condition 2 below is satisfied. In this case, the TRPs may be interpreted as CORESET pool indexes.

### [Condition 1]

CORESET pool index with 1 is configured.

### [Condition 2]

Two different values (for example, 0 and 1) of CORESET pool indexes are configured.

The UE may judge that the multiple TRPs are multiple TRPs based on single DCI when the following condition is satisfied. In this case, two TRPs may be interpreted as two TCI states indicated by a MAC CE/DCI.

### [Condition]

In order to indicate one or two TCI states for one code point of a TCI field in DCI, an "enhanced TCI state activation/deactivation MAC CE for a UE-specific PDSCH (Enhanced TCI states Activation/Deactivation for UE-specific PDSCH MAC CE)" is used.

DCI for common beam indication may be a UE-specific DCI format (for example, DL DCI format (for example, 1_1 or 1_2) or UL DCI format (for example, 0_1 or 0_2)), or may be a UE-group common DCI format.

### (Simultaneous Beam Update for Plurality of CCs)

In Rel. 16, one MAC CE can update beam indexes (TCI states) for a plurality of CCs.

Up to two applicable CC lists (for example, applicable-CC-list) can be configured for the UE by RRC. When two applicable CC lists are configured, the two applicable CC lists may correspond to respective intra-band CA in FR1 and intra-band CA in FR2.

A TCI state activation MAC CE for a PDCCH activates TCI states associated with the same CORESET ID on all BWPs/CCs in the applicable CC list.

A TCI state activation MAC CE for a PDSCH activates TCI states on all BWPs/CCs in the applicable CC list.

A spatial relation activation MAC CE for an A-SRS/SP-SRS activates a spatial relation associated with the same SRS resource ID on all BWPs/CCs in the applicable CC list.

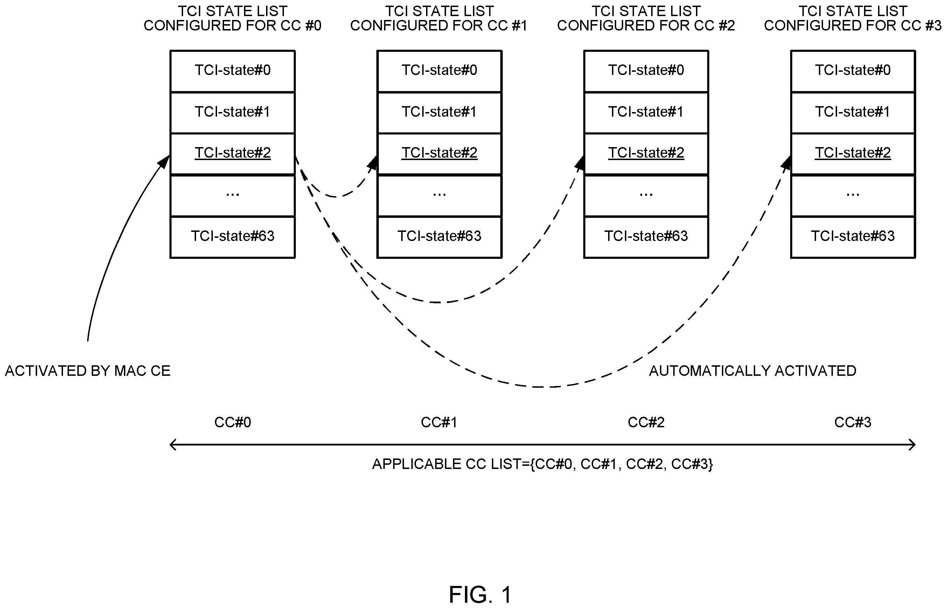

In an example of FIG. 1, an applicable CC list indicating CC #0, CC #1, CC #2, and CC #3 and a list indicating 64 TCI states for a CORESET or a PDSCH on each CC are configured for the UE. When one TCI state on CC #0 is activated by the MAC CE, a corresponding TCI state is activated on CC #1, CC #2, and CC #3.

A case that such simultaneous beam update is only applicable to a single TRP case is under study.

For the PDSCH, the UE may be based on procedure A below.

### [Procedure A]

In one CC/DL BWP or in one set of CCs/BWPs, the UE receives an activation command for mapping up to 8 TCI states to code points of a DCI field (TCI field). When one set of TCI state IDs is activated for one set of CCs/DL BWPs, then an applicable CC list is determined by a CC indicated in the activation command, and the same set of TCI states is applied to all DL BWPs in the indicated CC. Only if a plurality of different values of CORESET pool indices (CORESETPoolIndex) in a CORESET information element (ControlResourceSet) are not provided for the UE, and at least one TCI code point mapped to two TCI states is not provided for the UE, one set of TCI state IDs can be activated for one set of CCs/DL BWPs.

For the PDCCH, the UE may be based on procedure B below.

### [Procedure B]

If up to two lists of cells for simultaneous TCI state activation by a simultaneous TCI update list (at least one of simultaneousTCI-UpdateList-r16 and simultaneousTCI-UpdateListSecond-r16) are provided for the UE by a simultaneous TCI cell list (simultaneousTCI-CellList), the UE applies, to CORESETs having index p in all configured DL BWPs of all configured cells in one list determined on the basis of a serving cell index provided by a MAC CE command, antenna port quasi co-location (QCL) provided by TCI states having the same activated TCI state ID value. Only if a plurality of different values of CORESET pool indices (CORESETPoolIndex) in a CORESET information element (ControlResourceSet) are not provided for the UE, and at least one TCI code point mapped to two TCI states is not provided for the UE, the simultaneous TCI cell list can be provided for the simultaneous TCI state activation.

For a semi-persistent (SP)/aperiodic (AP)-SRS, the UE may be based on procedure C below.

### [Procedure C]

When spatial relation information (spatialRelationInfo) for SP or AP-SRS resources configured by an SRS resource information element (higher layer parameter SRS-Resource) is activated/updated for one set of CCs/BWPs by a MAC CE, then an applicable CC list is indicated by a simultaneous spatial update list (higher layer parameter simultaneousSpatial-UpdateList-r16 or simultaneousSpatial-UpdateListSecond-r16), and in all BWPs in an indicated CC, the spatial relation information is applied to the SP or AP-SRS resources having the same SRS resource ID. Only if a plurality of different values of CORESET pool indices (CORESETPoolIndex) in a CORESET information element (ControlResourceSet) are not provided for the UE, and at least one TCI code point mapped to two TCI states is not provided for the UE, spatial relation information (spatialRelationInfo) for SP or AP-SRS resources configured by an SRS resource information element (higher layer parameter SRS-Resource) is activated/updated for one set of CCs/BWPs by a MAC CE.

The simultaneous TCI cell list (simultaneousTCI-CellList) and simultaneous TCI update list (at least one of simultaneousTCI-UpdateList1-r16 and simultaneousTCI-UpdateList2-r16) are lists of serving cells in which TCI relations can be simultaneously updated by using the MAC CE. simultaneousTCI-UpdateList1-r16 and simultaneousTCI-UpdateList2-r16 do not include the same serving cell.

The simultaneous spatial updated list (at least one of higher layer parameters simultaneousSpatial-UpdatedList1-r16 and simultaneousSpatial-UpdatedList2-r16) is a list of serving cells in which spatial relations can be simultaneously updated by using the MAC CE. simultaneousSpatial-UpdatedList1-r16 and simultaneousSpatial-UpdatedList2-r16 do not include the same serving cell.

Here, the simultaneous TCI update list and the simultaneous spatial updated list are configured by the RRC, the CORESET pool indices of the CORESET are configured by the RRC, and the TCI code point mapped to the TCI states is indicated by the MAC CE.

### (Unified/Common TCI Framework)

According to a unified TCI framework, UL and DL channels can be controlled by a common framework. Instead of defining a TCI state or a spatial relation for each channel in a manner similar to that of Rel. 15, the unified TCI framework may indicate a common beam (common TCI state) and apply the common beam to all UL and DL channels, or may apply a UL common beam to all UL channels and apply a DL common beam to all DL channels.

One common beam for both DL and UL or a DL common beam and a UL common beam (two common beams in total) are under study.

The UE may assume the same TCI state (joint TCI state, joint TCI pool, joint common TCI pool) for the UL and DL. The UE may assume different TCI states (separate TCI states, separate TCI pools, UL separate TCI pool and DL separate TCI pool, separate common TCI pools, UL common TCI pool and DL common TCI pool) for the respective UL and DL.

Default beams for the UL and DL may be unified by MAC CE-based beam management (MAC CE-level beam indication). The default beams may be unified with a default UL beam (spatial relation) by updating a default TCI state for the PDSCH.

A common beam/unified TCI state from the same TCI pool (joint common TCI pool, joint TCI pool, set) for both of the UL and DL may be indicated by DCI-based beam management (DCI-level beam indication). M (> 1) TCI states may be activated by the MAC CE. UL/DL DCI may select one TCI state from M active TCI states. The selected TCI state may be applied to channels/RSs for both of the UL and DL.

The TCI pool (set) may be a plurality of TCI states configured by an RRC parameter, or may be a plurality of TCI states (active TCI states, active TCI pools, sets) activated by the MAC CE, out of a plurality of TCI states configured by the RRC parameter. Each TCI state may be a QCL type A/D RS. As the QCL type A/D RS, an SSB, a CSI-RS, or an SRS may be configured.

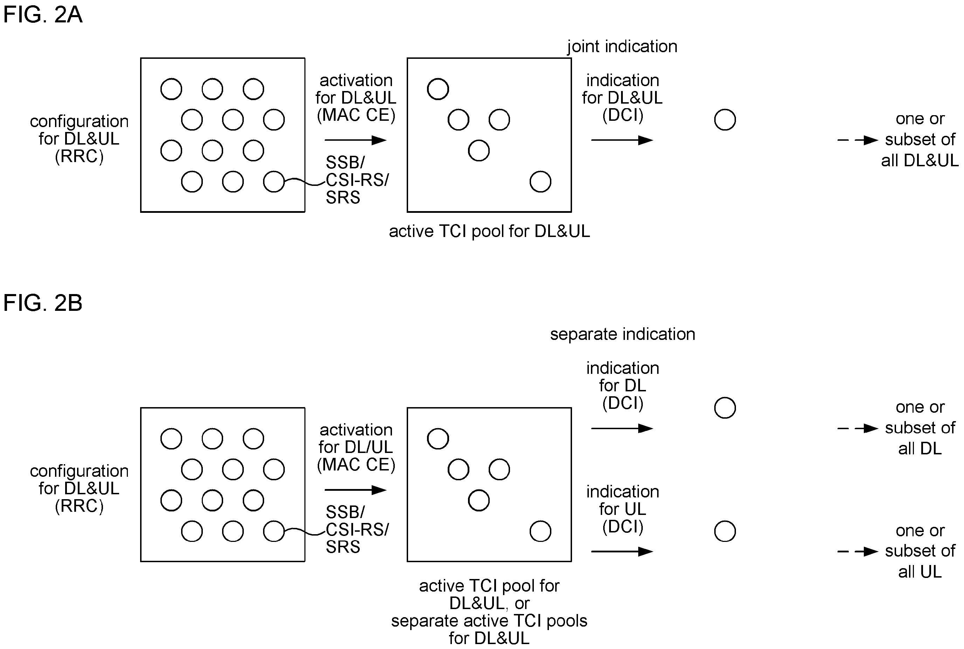

In an example of FIG. 2A, the RRC parameter (information element) configures a plurality of TCI states for both of the DL and UL. The MAC CE may activate a plurality of TCI states out of the plurality of configured TCI states. DCI may indicate one of the plurality of activated TCI states. The DCI may be UL/DL DCI. The indicated TCI state may be applied to at least one (or all) of UL/DL channels/RSs. A DCI may indicate both a UL TCI and a DL TCI.

In the example of FIG. 2A, one dot may be one TCI state applied to both of the UL and DL, or may be two TCI states applied to the respective UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that in the present disclosure, a higher layer parameter (RRC parameter) to configure a plurality of TCI states may be referred to as configuration information to configure a plurality of TCI states, or may be simply referred to as "configuration information." In the present disclosure, a case that one of a plurality of TCI states is indicated by using DCI may be reception of indication information to indicate one of a plurality of TCI states included in the DCI, or may simply be reception of "indication information."

In an example of FIG. 2B, the RRC parameter configures a plurality of TCI states (joint common TCI pool) for both of the DL and UL. The MAC CE may activate a plurality of TCI states (active TCI pool) out of the plurality of configured TCI states. An (separate) active TCI pool for each of the UL and DL may be configured/activated.

DL DCI or new DCI format may select (indicate) one or more (for example, one) TCI states. The selected TCI states may be applied to one or more (or all) DL channels/RSs. The DL channels may be PDCCHs/PDSCHs/CSI-RSs. The UE may determine a TCI state for each DL channel/RS by using TCI state operation (TCI framework) in Rel. 16. UL DCI or new DCI format may select (indicate) one or more (for example, one) TCI states. The selected TCI states may be applied to one or more (or all) UL channels/RSs. The UL channels may be PUSCHs/SRSs/PUCCHs. Thus, different DCIs may separately indicate the UL TCI and the DL DCI.

Existing DCI format 1_2/1_2 may be used for indication of the common TCI state.

A common TCI framework may have separate TCI states for the DL and UL.

A common TCI framework may have separate TCI states for the DL and UL. It is undesirable that a common UL-only TCI state is indicated by using DCI format 1_1/1_2.

### (Unified TCI Framework in Carrier Aggregation (CA))

For Rel-17 (or later versions) NR, introduction of a unified TCI state framework in CA is under study. It is expected that the common TCI state indicated for the UE is common among CCs (cells) (QCL type D among at least CCs). This is due to a case that simultaneous reception of different DL channels/RSs of QCL type D and simultaneous transmission of different UL channels/RSs with spatial relations are not supported by existing specifications (Rel. 15/16) except in a case of transmission/reception using multiple TRPs or the like.

However, when beam indication is performed by using an individual MAC CE/DCI for each CC, there is concern about an increase in signaling overhead.

For the unified TCI framework, update/activation of a common TCI state ID performed in order to provide common QCL information/common UL transmission spatial filter across a set of a plurality of configured CCs is under study.

As a TCI state pool for the CA, option 1 and option 2 below are under study.

### [Option 1]

A single TCI state pool configured by RRC may be shared (configured) with a set of a plurality of configured CCs (cells)/BWPs. For example, a cell group TCI state may be defined, or a TCI state pool for PDSCHs in reference cells may be reused. A CC (cell) ID for a QCL type A RS may be absent in a TCI state, and the CC (cell) ID for the QCL type A RS may be determined in accordance with a target CC (cell) with the TCI state.

In option 1, a common TCI state pool is configured for each plurality of CCs/BWPs, and thus when one common TCI state is indicated by using a MAC CE/DCI, the indicated common TCI state may be applied to all CCs/BWPs (all CCs/BWPs included in a pre-configured CC/BWP list).

### [Option 2]

A TCI state pool may be configured by the RRC for each individual CC.

In option 2, when an applied CC/BWP list for simultaneous beam update is pre-configured by using RRC, and beam update is performed by using a MAC CE/DCI in any one of CCs/BWPs included in the CC/BWP list, in a manner similar to that of Rel. 16, the update may be applied to all CCs/BWPs.

In option 1, a common TCI state pool is configured (shared) by the RRC for the plurality of CCs, a TCI state in the common TCI state pool is indicated by the common TCI state ID, and one RS determined on the basis of the TCI state is used for indicating a QCL type D RS across the set of the plurality of configured CCs/BWPs (constraint 1).

In option 2, an individual common TCI state pool is configured by the RRC for each CC, a TCI state in the common TCI state pool is indicated by the common TCI state ID, and one RS determined on the basis of the TCI state is used for indicating a QCL type D RS across the set of the plurality of configured CCs/BWPs (constraint 2).

### (Constraints on QCL Configuration)

As mentioned above, a case that beams for multiple types of channels are controlled by common beam indication/activation (MAC CE/DCI) in accordance with a common TCI framework is under study, but this control is performed for one BWP/CC (cell).

Simultaneous beam update across a plurality of CCs specified in specifications for Rel. 16 can update beams for a plurality of BWPs/CCs by using one MAC CE beam indication, and thus overhead of beam control can be reduced.

In Rel. 15/16, a QCL source RS (type A RS and type D RS) configured in a TCI state for a PDCCH DMRS/PDSCH DMRS is limited to cases of (case 1) to (case 3) below:
(Case 1) The type A RS is a tracking reference signal (TRS) (CSI-RS for which a higher layer parameter "trs-Info" is configured), and the type D RS is a CSI-RS equal to the type A RS.
(Case 2) The type A RS is the TRS, and the type D RS is a CSI-RS for which a higher layer parameter "repetition" is configured.
(Case 3) The type A RS is a CSI-RS for which the higher layer parameter "trs-Info" is not configured and for which the higher layer parameter "repetition" is not configured, and the type D RS is a CSI-RS equal to the type A RS.

Thus, a case where the type A RS and the type D RS become different CSI-RS resources is only a case of (case 2) described above.

The CSI-RS for which the higher layer parameter "repetition" is configured can be configured in order to support receive beam determination by the UE. However, the receive beam determination by the UE can be performed without using the CSI-RS for which the higher layer parameter "repetition" is configured.

On the other hand, the network (NW, for example, a base station) transmits a TRS as the type A RS, and thus it is conceivable that management of a case of (case 1) described above in which the type A RS is used as the type D RS is typical.

It is preferable that the simultaneous beam update across the plurality of CCs is also possible in the common TCI framework. However, there are constraints on configuration of QCL between the PDCCH DMRS/PDSCH DMRS and the TRS in the plurality of CCs as follows.

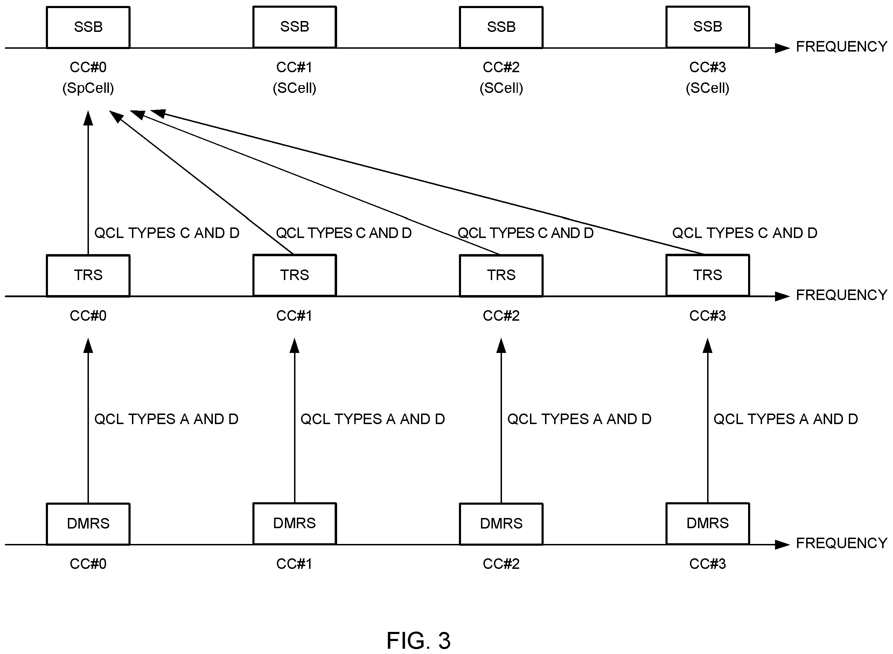

For example, such configuration as shown in FIG. 3 is configurable in Rel. 15/16. Assume that CC #0 being a special cell (SpCell) (primary cell (PCell) or a primary secondary cell (PSCell)) and CC #1, CC #2, and CC #3 being SCells are configured, and an SSB, a TRS, and a PDCCH DMRS/PDSCH DMRS (which may be simply referred to as a DMRS) are transmitted in each CC. In this case, a TRS of each CC is in relationships of QCL types C and D with an SSB of CC #0, and a PDCCH of each CC is in relationships of QCL types A and D with a TRS of the same CC.

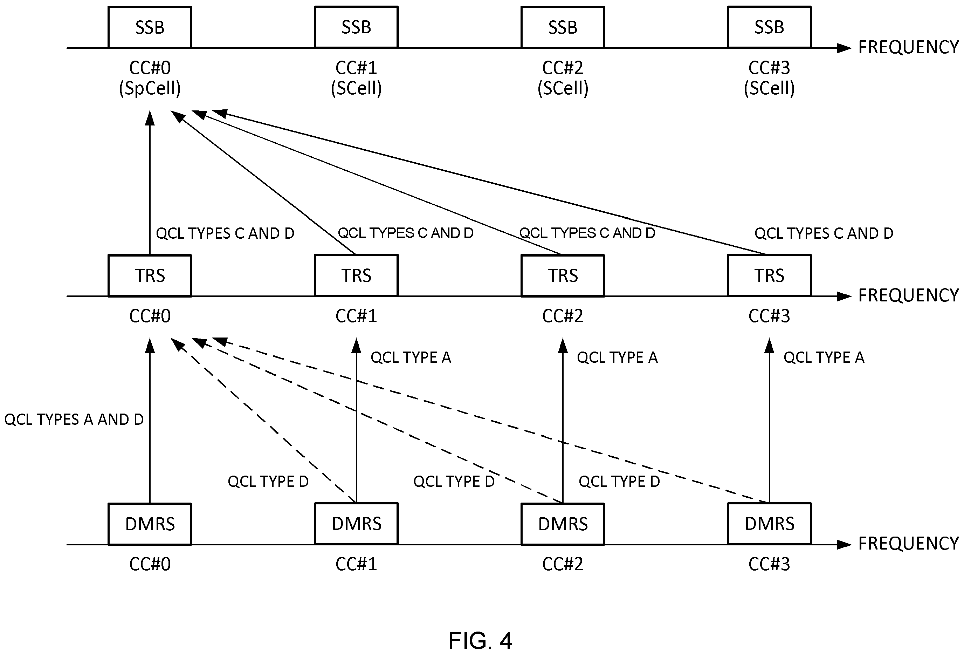

For example, such configuration as shown in FIG. 4 is unconfigurable in Rel. 15/16. Similarly to FIG. 3 mentioned above, when the TRS of each CC is in the relationships of QCL types C and D with the SSB of CC #0, and the DMRS of each CC is in the relationship of QCL type A with the TRS of the same CC, DMRSs of CC #1, CC #2, and CC #3 fail to be in the relationship of QCL type D with a TRS of CC #0 (described by using dashed lines). When a TCI state for the PDCCH DMRS/PDSCH DMRS is a TRS, a QCL type A RS and a QCL type D RS need to be the same TRS.

When a TRS is configured as a QCL type A/D RS in a TCI state on a given CC, a TRS of another CC fails to be configured as the QCL type A/D RS. Thus, also in a case where a common TCI pool or a common TCI is configured/updated/indicated between the plurality of CCs, TCI state (TCI state including the QCL type A/D RS) configuration will be performed for each CC.

When a CSI-RS is configured as a QCL type D RS in a TCI state on a given CC, there is a case where a CSI-RS of another CC is configurable as the QCL type D RS in a TCI state for a PDCCH/PDSCH on the given CC. Also in this case, it is necessary that a CSI-RS/TRS of the same CC is configured as a QCL type A RS in the TCI state. The QCL type A RS indicates that parameters for determining channel characteristics, such as delay spreads and average delays, are the same, and thus this is caused by a possibility that values of these parameters are different from each other in different CCs.

A cell with the QCL type A RS is required to be the same as a cell with a PDSCH/PDCCH DMRS for which a TCI state is configured.

As mentioned above, when a QCL type D RS is a TRS, the QCL type D RS is required to be the same as the QCL type A RS. Combining the above description, when a QCL type D RS is a TRS, a cell with the QCL type D RS is required to be the same as a cell with a PDSCH/PDCCH DMRS for which a TCI state is configured.

When a QCL type D RS is a CSI-RS for which repetition is configured (the QCL type D RS has a CSI-RS resource in an NZP CSI-RS resource set for which a higher layer parameter "repetition" is configured (higher layer parameter "repetition" is ON), a cell with the QCL type D RS may be different from a cell with a PDSCH/PDCCH DMRS for which a TCI state is configured.

Incidentally, considering constraint 1 and constraint 2 mentioned above, for the QCL source RS with a common TCI state, the QCL type A RS becomes a TRS of each CC (CC with a DMRS to which the common TCI state is applied), and the QCL type D RS becomes a TRS of one CC. This leads to operation capable of being performed only in case 2 in QCL configuration constraints mentioned above (issue 1).

In the unified TCI state framework in the CA, a TCI state is indicated by using a MAC CE/DCI, and the indicated TCI state is applied in a plurality of CCs/BWPs, and thus applying, in a plurality of CCs/BWPs, a TCI state indicated by using DCI of a given CC/BWP may increase complexity of UE operation (issue 2).

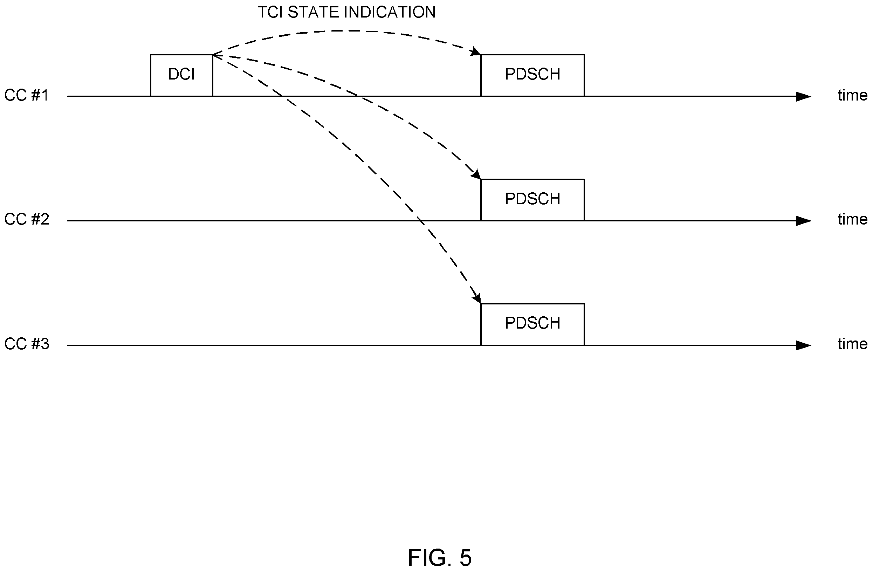

Furthermore, FIG. 5 is a diagram to show an example of TCI state indication in the unified TCI state framework in the CA. In the example shown in FIG. 5, the UE receives, in CC #1, a TCI state indication for a PDSCH in each of CC #1 to CC #3. Thus, a case that DCI of a given CC has an impact on transmission/reception of a channel/signal in another CC requires support for operation similar to cross-carrier scheduling, and thus may increase complexity of the UE. More specifically, in the example shown in FIG. 5, indication for CC #2 and CC #3 using DCI of CC #1 becomes DCI indication across CCs, and thus it is conceivable that processing time and an implementation cost in the UE increase.

Thus, a method for configuring/indicating, for the UE from the NW, a timing from beam (for example, unified TCI state) indication using (based on) DCI to application of the TCI state has not been fully studied. Specifically, how a start and an end of the timing is determined has not been fully studied. Unless this study is fully performed, communication quality reduction, throughput reduction, and the like may occur (issue 3).

Thus, for at least one of issue 1 to issue 3, the inventors of the present invention came up with the idea of a configuration and indication method related to a common beam (common TCI) across a plurality of BWPs/CCs.

Embodiments according to the present disclosure will be described in detail with reference to the drawings as follows. The radio communication methods according to respective embodiments may each be employed individually, or may be employed in combination. Embodiments for resolving issue 1 and issue 2 are described in first to fifth embodiments, and an embodiment for resolving issue 3 is described in a sixth embodiment, but respective embodiments in the present disclosure may be employed in combination.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

For example, the MAC signaling may use MAC control elements (MAC CEs), MAC Protocol Data Units (PDUs), and the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a pool, a set, a group, a list, and candidates may be interchangeably interpreted.

In the present disclosure, a DMRS, a DMRS port, and an antenna port may be interchangeably interpreted.

In the present disclosure, a special cell, an SpCell, a PCell, and a PSCell may be interchangeably interpreted.

In the present disclosure, a beam, a spatial domain filter, a spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, a QCL type D RS in a TCI state/QCL assumption, a QCL type A RS in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a common beam, a common TCI, a common TCI state, a unified TCI, a unified TCI state, a TCI state applicable to DL and UL, a TCI state applied to a plurality (multiple types) of channels/RSs, a TCI state applicable to multiple types of channels/RSs, and a PL-RS may be interchangeably interpreted.

In the present disclosure, a plurality of TCI states configured by RRC, a plurality of TCI states activated by a MAC CE, a pool, a TCI state pool, an active TCI state pool, a common TCI state pool, a joint TCI state pool, a separate TCI state pool, a UL common TCI state pool, a DL common TCI state pool, a common TCI state pool configured/activated by RRC/MAC CE, and TCI state information may be interchangeably interpreted.

In the present disclosure, a CC list, a serving cell list, a CC list in cell group configuration (CellGroupConfig), an applicable list, a simultaneous TCI update list/second simultaneous TCI update list, simultaneousTCI-UpdateList1-r16/simultaneousTCI-UpdateList2-r16, a simultaneous TCI cell list, simultaneousTCI-CellList, a simultaneous spatial updated list/second simultaneous spatial updated list, simultaneousSpatial-UpdatedList1-r16/simultaneousSpatial-UpdatedList2-r16, a configured CC, a configured list, a BWP/CC in a configured list, all BWPs/CCs in a configured list, a CC indicated by an activation command, an indicated CC, a CC on which a MAC CE has been received, and information indicating a plurality of cells for update of at least one of a TCI state and a spatial relation may be interchangeably interpreted.

In the present disclosure, "TCI state A is of the same QCL type D as that of TCI state B," "TCI state A and TCI state B are the same," "TCI state A is QCL type D with TCI state B," and the like may be interchangeably interpreted.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a CSI-RS for tracking, a CSI-RS having TRS information (higher layer parameter "trs-Info"), an NZP CSI-RS resource in an NZP CSI-RS resource set having TRS information, an NZP-CSI-RS resource in an NZP-CSI-RS resource set constituted by a plurality of NZP-CSI-RS resources for the same antenna port, and a TRS resource may be interchangeably interpreted. In the present disclosure, a CSI-RS resource, a CSI-RS resource set, a CSI-RS resource group, and an information element (IE) may be interchangeably interpreted.

In the present disclosure, a panel, an Uplink (UL) transmission entity, a TRP, a spatial relation, a control resource set (CORESET), a PDSCH, a codeword, a base station, an antenna port for a given signal (for example, a demodulation reference signal (DMRS) port), an antenna port group for a given signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP-related ID, a CORESET pool index, a location of one TCI state (ordinal number, first TCI state or second TCI state) out of two TCI states corresponding to one code point of a field in DCI, and a TRP may be interchangeably interpreted.

In the present disclosure, a TRP, a transmission point, a panel, a DMRS port group, a CORESET pool, and one of two TCI states associated with one code point of a TCI field may be interchangeably interpreted.

In the present disclosure, a single TRP, a single-TRP system, single-TRP transmission, and a single PDSCH may be interchangeably interpreted. In the present disclosure, multiple TRPs, a multi-TRP system, multi-TRP transmission, and multiple PDSCHs may be interchangeably interpreted. In the present disclosure, single DCI, a single PDCCH, multiple TRPs based on single DCI, and activation of two TCI states on at least one TCI code point may be interchangeably interpreted.

In the present disclosure, a single TRP, a channel using a single TRP, a channel using one TCI state/spatial relation, a case that multiple TRPs are not enabled by RRC/DCI, a case that a plurality of TCI states/spatial relations are not enabled by RRC/DCI, and a case that a CORESET pool index (CORESETPoolIndex) value with 1 is not configured for any CORESET, and any code point of a TCI field is not mapped to two TCI states may be interchangeably interpreted.

In the present disclosure, multiple TRPs, a channel using multiple TRPs, a channel using a plurality of TCI states/spatial relations, a case that multiple TRPs are enabled by RRC/DCI, a case that a plurality of TCI states/spatial relations are enabled by RRC/DCI, and at least one of multiple TRPs based on single DCI and multiple TRPs based on multiple DCI may be interchangeably interpreted. In the present disclosure, multiple TRPs based on multiple DCI and a case that a CORESET pool index (CORESETPoolIndex) value with 1 is configured for a CORESET may be interchangeably interpreted. In the present disclosure, multiple TRPs based on single DCI and a case that at least one code point of a TCI field is mapped to two TCI states may be interchangeably interpreted.

In the present disclosure, TRP #1 (first TRP) may correspond to CORESET pool index = 0, or may correspond to a first TCI state out of two TCI states corresponding to one code point of a TCI field. TRP #2 (second TRP) may correspond to CORESET pool index = 1, or may correspond to a second TCI state out of the two TCI states corresponding to one code point of the TCI field.

In the present disclosure, CORESET 0, a CORESET having index 0, and a common CORESET may be interchangeably interpreted.

In the present disclosure, a target, an application destination, and a destination may be interchangeably interpreted. In the present disclosure, a QCL source, a source, and reference may be interchangeably interpreted.

### (Radio Communication Method)

In the present disclosure, a DL TCI, a DL common TCI, a DL unified TCI, a common TCI, and a unified TCI may be interchangeably interpreted. In the present disclosure, a UL TCI, a UL common TCI, a UL unified TCI, a common TCI, and a unified TCI may be interchangeably interpreted.

In the present disclosure, a case of a joint TCI pool and a case where a joint TCI pool has been configured may be interchangeably interpreted. In the present disclosure, a case of a separate TCI pool and a case where a separate TCI pool has been configured may be interchangeably interpreted.

In the present disclosure, the case where the joint TCI pool has been configured, a case where a TCI pool configured for DL and a TCI pool configured for UL are in common, a case where a TCI pool for both DL and UL has been configured, and a case where one TCI pool (one set of TCIs) has been configured may be interchangeably interpreted.

In the present disclosure, the case where the separate TCI pool has been configured, a case where a TCI pool configured for DL and a TCI pool configured for UL are different from each other, a case where a DL TCI pool (a first TCI pool, a first TCI set) and a UL TCI pool (a second TCI pool, a second TCI set) have been configured, a case where a plurality of TCI pools (a plurality of sets of TCIs) have been configured, and a case where a DL TCI pool has been configured may be interchangeably interpreted. When a DL TCI pool has been configured, a UL TCI pool may be equal to the configured TCI pool.

In the present disclosure, a channel/RS to which the common TCI is applied may be a PDSCH/HARQ-ACK information/PUCCH/PUSCH/CSI-RS/SRS.

In the present disclosure, a CC/BWP to which a unified TCI state is applied, a destination of application of the unified TCI state, and an application destination may be interchangeably interpreted.

In the present disclosure, a first QCL type and QCL type A may be interchangeably interpreted. Also, a second QCL type and QCL type D may be interchangeably interpreted.

In each embodiment of the present disclosure, a pool including a plurality of unified TCI states may be configured/activated for a UE, and one or more TCI states out of the plurality of unified TCI states may be indicated. The configuration/activation may be performed by using configuration information transmitted via higher layer signaling (for example, RRC signaling/MAC CE). The indication may be performed by using indication information transmitted by using DCI.

Note that in the present disclosure, a signaling structure, signaling, configuration, a structure, configuration information, indication, indication information, and the like may be interchangeably interpreted.

In the present disclosure, BFR, BFR configuration, BFR procedure, BFD, BFD procedure, a BFD-RS, BFD-RS configuration, RLM, RLM configuration, RLM procedure, an RLM-RS, and RLM-RS configuration may be interchangeably interpreted. In the present disclosure, per-cell BFR, cell-specific BFR, and BFR in Rel. 15/16 may be interchangeably interpreted. In the present disclosure, per-TRP BFR, TRP-specific BFR, and BFR in Rel. 17/Rel. 17 (or later versions) may be interchangeably interpreted.

### <First Embodiment>

A UE may follow, as a TCI state pool for CA, QCL constraints described in at least one of Embodiment 1-1 and Embodiment 1-2 below.

### <<Embodiment 1-1>>

In Embodiment 1-1, a single TCI state pool for a set of a plurality of configured CCs (cells)/BWPs may be configured for the UE by RRC. In Embodiment 1-1, the UE may follow at least one of option 1-A and option 1-B described below in configuration of a second QCL type (for example, QCL type D).

### [Option 1-A]

The UE may follow a specific QCL constraint different from QCL constraints defined in Rel. 16 mentioned above. For the QCL constraint, when a first QCL type (for example, QCL type A) TRS and a second QCL type (for example, QCL type D) TRS are present in configuration of a TCI state for a PDCCH DMRS/PDSCH DMRS, the first QCL type TRS and the second QCL type TRS may be capable of being different resources. The QCL constraint will be detailed in a second embodiment described below.

### [Option 1-B]

The UE may perform the configuration of the second QCL type (for example, QCL type D) in accordance with the same method as a method for configuring a first QCL type (for example, QCL type A). For example, a CC (cell)/BWP ID for a QCL type D RS may be absent in a TCI state, and the CC (cell)/BWP ID for the QCL type D RS may be determined in accordance with at least one of a target CC (cell) with the TCI state and a corresponding active BWP.

For example, for each active BWP applied for each CC, the UE may determine (locate) a corresponding QCL type D source RS by using a corresponding BWP ID, CC ID, and QCL type D source RS ID.

### <<Embodiment 1-2>>

In Embodiment 1-2, a TCI state pool may be configured for the UE by the RRC for each individual CC. In Embodiment 1-2, the UE may follow at least one of option 2-A and option 2-B described below in configuration of a second QCL type (for example, QCL type D).

### [Option 2-A]

The UE may follow a specific QCL constraint different from QCL constraints defined in Rel. 16 mentioned above. For the QCL constraint, when a first QCL type (for example, QCL type A) TRS and a second QCL type (for example, QCL type D) TRS are present in configuration of a TCI state for a PDCCH DMRS/PDSCH DMRS, the first QCL type TRS and the second QCL type TRS may be capable of being different resources. The QCL constraint will be detailed in the second embodiment described below.

### [Option 2-B]

A second QCL type (for example, QCL type D) RS may be derived (determined) for the UE on the basis of the same ID as an ID of a TCI state configured in the individual CC.

### <Second Embodiment>

In the second embodiment, a QCL constraint different from QCL constraints defined in Rel. 16 (or earlier versions) mentioned above will be described. In the present disclosure, the QCL constraints defined in Rel. 16 (or earlier versions) may be referred to as a first QCL constraint. Also, the QCL constraint different from the QCL constraints defined in Rel. 16 (or earlier versions) may be referred to as a second QCL constraint.

With respect to a QCL source RS with a common TCI state, in addition to a higher layer parameter (for example, qcl_Type1) related to a first QCL type (for example, QCL type A) RS, a higher layer parameter (for example, qcl_Type2) related to a second QCL type (for example, QCL type D) RS may be configured for a UE.

In the common TCI state, the first QCL type RS and the second QCL type RS may be different from each other. For example, the UE may assume that a QCL type A RS and a QCL type D RS are configured to be different from each other.

When the first QCL type RS and the second QCL type RS are different from each other in the common TCI state, a case where the first QCL type RS becomes a TRS, and where the second QCL type RS becomes a CSI-RS (having a higher layer parameter "repetition") for which repetition is configured may be excluded.

The first QCL type RS and the second QCL type RS may be RSs in different CCs included in a common CC list. Note that the first QCL type RS and the second QCL type RS may be RSs with same RS IDs or RSs with same TCI IDs in different CCs included in a common CC list. The first QCL type RS and the second QCL type RS may be RSs included in a common RS list/common TCI state list. According to these, it is possible to appropriately configure/indicate a QCL type D RS with less control overhead without a NW transmitting an additional CSI-RS resource (for example, a CSI-RS for which repetition is configured).

The second QCL constraint configurable for the UE will be described below. The UE may assume that a QCL source RS (QCL type A RS and QCL type D RS) configured in a TCI state for a PDCCH DMRS/PDSCH DMRS follows (case 4) and (case 5) below in addition to/in place of the cases of (case 1) to (case 3) mentioned above:
(Case 4) The first QCL type RS is a TRS (CSI-RS for which a higher layer parameter "trs-Info" is configured), and the second QCL type RS is a TRS (CSI-RS for which the higher layer parameter "trs-Info" is configured).
(Case 5) The first QCL type RS is a TRS (CSI-RS for which the higher layer parameter "trs-Info" is configured), and the second QCL type RS is an SSB.

Note that second QCL type source RSs with the TCI state for the PDCCH DMRS/PDSCH DMRS in respective CCs may be required to be same RSs between CCs.

### (Case 4)

In case 4, the first QCL type RS and the second QCL type RS may be different CSI-RS resources.

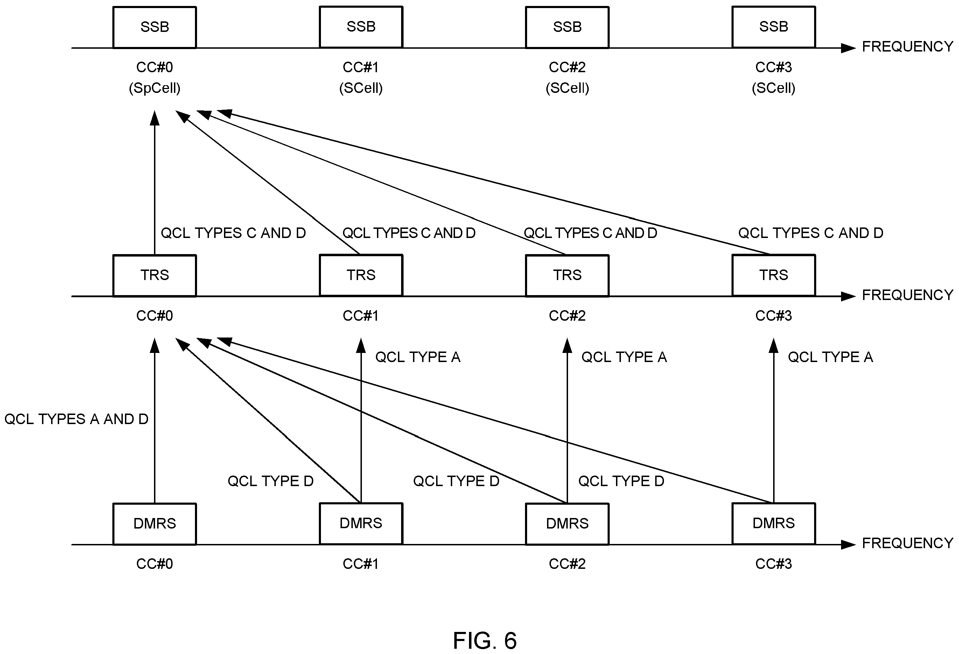

FIG. 6 is a diagram to show an example of the QCL constraint in case 4. In the example shown in FIG. 6, a TRS of each CC is in relationships of QCL types C and D with an SSB of CC #0. A DMRS of each CC (PDCCH DMRS/PDSCH DMRS) is in a relationship of QCL type A with a TRS of the same CC. In this case, the DMRS of each CC may be in a relationship of QCL type D with a TRS of CC #0.

### (Case 5)

For the first QCL type RS, using a TRS can make resource density higher and allows time/frequency correction to be performed more accurately as compared to an SSB, and thus the TRS is configured for time/frequency tracking. On the other hand, the second QCL type RS is used for obtaining a UL/DL (transmission/reception) spatial domain filter, and is also operable in resource density of the SSB.

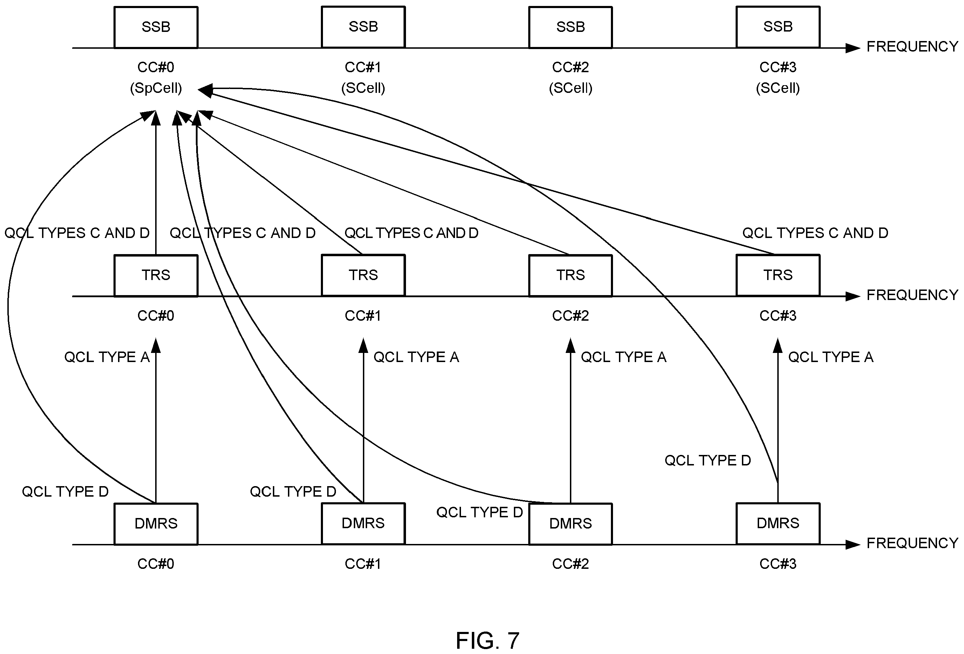

FIG. 7 is a diagram to show an example of the QCL constraint in case 5. In the example shown in FIG. 7, a TRS of each CC is in relationships of QCL types C and D with an SSB of CC #0. A DMRS of each CC (PDCCH DMRS/PDSCH DMRS) is in a relationship of QCL type A with a TRS of the same CC. In this case, the DMRS of each CC may be in a relationship of QCL type D with the SSB of CC #0.

### <Third Embodiment>

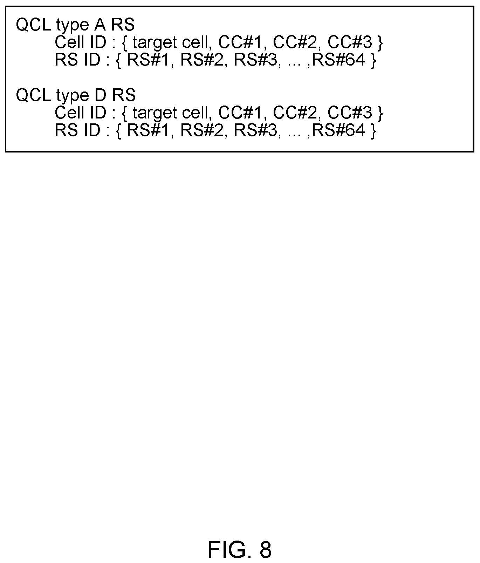

In a third embodiment, option 1-A mentioned above will be described in detail. In the third embodiment, information (configuration information) related to a first QCL type (for example, QCL type A) RS and notified to a UE may include any one of a plurality of cell IDs. The plurality of cell IDs may include a parameter for indicating a target cell (CC). The configuration information may include any one of a plurality of RS IDs (see FIG. 8).

In the present disclosure, the target cell may mean a cell with a target RS in a QCL relationship (a cell with a DMRS to use a TCI state, a cell in which a DMRS to which a TCI state is applied is used, or a cell to which a TCI state is applied). Each embodiment of the present disclosure shows a case where a parameter for explicitly indicating the target cell for the UE is notified, but when a parameter for indicating the target cell is not defined, and a cell ID is not notified to the UE, the UE may judge that the target cell has been indicated implicitly.

Information (configuration information) related to a second QCL type (for example, QCL type D) RS may be notified to the UE. When the configuration information is notified to the UE, the configuration information may include any one of a plurality of cell IDs. The plurality of cell IDs may include a parameter for indicating a target cell (CC). The configuration information may include any one of a plurality of RS IDs (see FIG. 8).

Note that in Rel. 15, a QCL type A RS is only an RS for which a TCI state is configured. In other words, a cell ID of the QCL type A RS fails to be configured for a cell other than the target cell. Thus, the information related to the first QCL type RS and notified to the UE may not include a cell ID, and may include an RS ID.

Note that an example of FIG. 8 is described by using, as an example, a case where the number of cell IDs is 4 and where the number of RS IDs is 64, but the respective numbers are not limited to this. The numbers may vary for each QCL type, or may be common.

The UE may assume that a second QCL type RS of each CC is configured as a second QCL type RS common to CCs. A NW may configure the second QCL type RS of each CC as the second QCL type RS common to the CCs (Embodiment 3-1).

The UE may assume that the second QCL type RS of each CC is not explicitly configured/indicated. The NW may not explicitly configure/indicate the second QCL type RS of each CC (Embodiment 3-2).

In Embodiment 3-2, an RS ID of the second QCL type RS may not be explicitly configured/indicated for the UE. The UE may judge that a first QCL type RS indicated by using a cell ID and an RS ID of the first QCL type RS in a cell ID of the second QCL type RS is the second QCL type RS.

In Embodiment 3-2, a cell ID of the second QCL type RS may not be explicitly configured/indicated for the UE. The UE may determine the cell ID of the second QCL type RS on the basis of a specific rule. The specific rule may be a case that the lowest (or highest) cell ID/BWP ID included in a CC list is judged to be the cell ID of the second QCL type RS.

In Embodiment 3-2, an RS ID and a cell ID of the second QCL type RS may not be explicitly configured/indicated for the UE. The UE may determine the RS ID and the cell ID of the second QCL type RS on the basis of a first QCL type RS to be configured/indicated and the above-described specific rule.

In this case, the UE needs to recognize whether the second QCL type RS has been configured. That is, when a second QCL type RS is configured, the UE needs to determine a UL/DL spatial domain filter on the basis of the configured second QCL type RS. Thus, the UE may receive information related to whether the second QCL type RS has been configured, and whether the second QCL type RS has been configured may be indicated for the UE.

For example, in a unified TCI state framework, when a higher layer parameter related to the second QCL type RS is configured to be enabled (for example, enable), the UE may judge that the second QCL type RS has been configured, and may determine the UL/DL spatial domain filter. In this case, the UE may determine, on the basis of a method mentioned above, a second QCL type RS to be used.

Embodiment 3-2 mentioned above corresponds to a case where the second QCL type RS is a TRS (CSI-RS), that is, (case 4) mentioned above. On the other hand, Embodiment 3-2 mentioned above may be employed in a case where the second QCL type RS is an SSB, that is, (case 5) mentioned above (Embodiment 3-3). That is, the UE may judge that the SSB is used for the second QCL type RS.

In Embodiment 3-3, an RS ID of the second QCL type RS may not be explicitly configured/indicated for the UE. The UE may judge that an SSB in a cell ID of the second QCL type RS is the second QCL type RS.

In Embodiment 3-3, a cell ID of the second QCL type RS may not be explicitly configured/indicated for the UE. The UE may determine the cell ID of the second QCL type RS on the basis of a specific rule. The specific rule may be a case that the lowest (or highest) cell ID/BWP ID included in a CC list is judged to be the cell ID of the second QCL type RS.

In Embodiment 3-3, an RS ID and a cell ID of the second QCL type RS may not be explicitly configured/indicated for the UE. The UE may determine the RS ID and the cell ID of the second QCL type RS on the basis of an SSB to be configured/indicated and the above-described specific rule.

In this case, the UE needs to recognize whether the second QCL type RS has been configured. That is, when a second QCL type RS is configured, the UE needs to determine a UL/DL spatial domain filter on the basis of the configured second QCL type RS. Thus, the UE may receive information related to whether the second QCL type RS has been configured, and whether the second QCL type RS has been configured may be indicated for the UE.

For example, in a unified TCI state framework, when a higher layer parameter related to the second QCL type RS is configured to be enabled (for example, enable), the UE may judge that the second QCL type RS has been configured, and may determine the UL/DL spatial domain filter. In this case, the UE may determine, on the basis of a method mentioned above, a second QCL type RS to be used.

According to the above third embodiment, it is possible to appropriately determine a second QCL type RS even when a single TCI state pool configured by RRC for a set of a plurality of configured CCs (cells)/BWPs is configured for the UE.

### <Fourth Embodiment>

In a fourth embodiment, option 2-A mentioned above will be described in detail. In option 2-A mentioned above, a common TCI state pool is configured for each CC/BWP.

The UE may assume that a second QCL type (for example, QCL type D) RS with the common TCI state pool for each CC is configured in common for CCs. A NW may configure, as a second QCL type RS common to the CCs, the second QCL type RS with the common TCI state pool for each CC (Embodiment 4-1) .

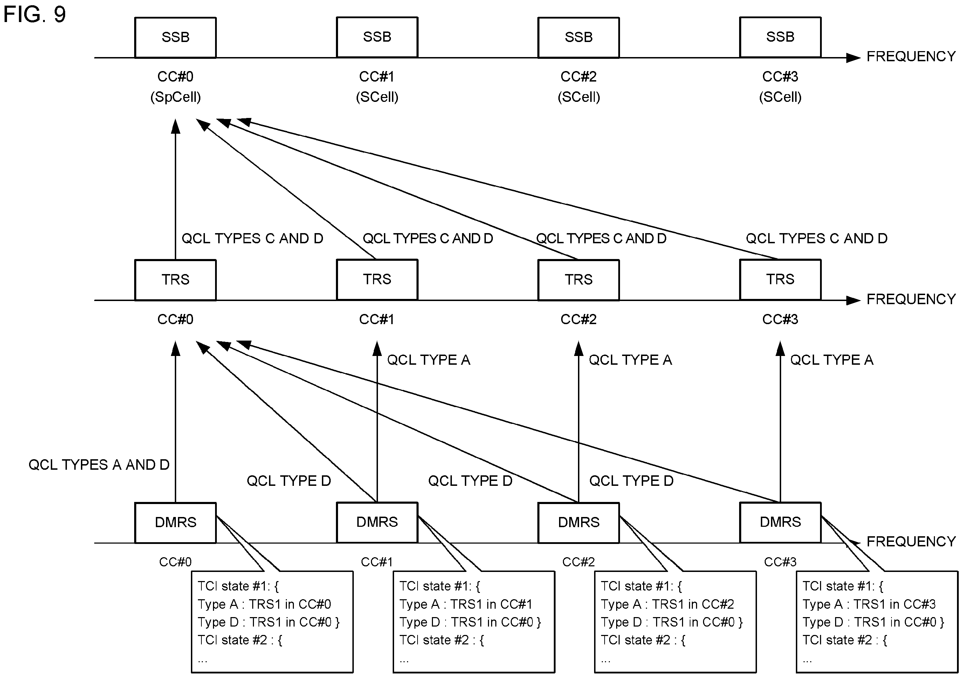

FIG. 9 is a diagram to show an example of QCL type D RS configuration according to Embodiment 4-1. In the example shown in FIG. 9, a TRS of each CC is in relationships of QCL types C and D with an SSB of CC #0. A DMRS of each CC (PDCCH DMRS/PDSCH DMRS) is in a relationship of QCL type A with a TRS of the same CC. In this case, the DMRS of each CC may be in a relationship of QCL type D with a TRS of CC #0. In configuration information about a common TCI state for CC #0, QCL type A RS configuration information may indicate CC #0 and TRS 1, and QCL type D RS configuration information may indicate CC #0 and TRS 1. In configuration information about a common TCI state for CC #1, QCL type A RS configuration information may indicate CC #1 and TRS 1, and QCL type D RS configuration information may indicate CC #0 and TRS 1. In configuration information about a common TCI state for CC #2, QCL type A RS configuration information may indicate CC #2 and TRS 1, and QCL type D RS configuration information may indicate CC #0 and TRS 1. In configuration information about a common TCI state for CC #3, QCL type A RS configuration information may indicate CC #3 and TRS 1, and QCL type D RS configuration information may indicate CC #0 and TRS 1.

The UE may assume that the second QCL type RS with the common TCI state pool for each CC is not explicitly configured/indicated between the respective CCs. The NW may not explicitly configure/indicate, between the respective CCs, the second QCL type RS with the common TCI state pool for each CC (Embodiment 4-2).

In Embodiment 4-2, an RS ID of the second QCL type RS may not be explicitly configured/indicated for the UE. The UE may judge that a first QCL type (for example, QCL type A) RS or an SSB in a cell ID of the second QCL type RS is the second QCL type RS.

In Embodiment 4-2, a cell ID of the second QCL type RS may not be explicitly configured/indicated for the UE. The UE may determine the cell ID of the second QCL type RS on the basis of a specific rule. The specific rule may be a case that the lowest (or highest) cell ID/BWP ID included in a CC list is judged to be the cell ID of the second QCL type RS.

In Embodiment 4-2, an RS ID and a cell ID of the second QCL type RS may not be explicitly configured/indicated for the UE. The UE may determine the RS ID and the cell ID of the second QCL type RS on the basis of a first QCL type RS or an SSB to be configured/indicated and the above-described specific rule.

In this case, the UE needs to recognize whether the second QCL type RS has been configured. That is, when a second QCL type RS is configured, the UE needs to determine a UL/DL spatial domain filter on the basis of the configured second QCL type RS. Thus, the UE may receive information related to whether the second QCL type RS has been configured, and whether the second QCL type RS has been configured may be indicated for the UE.

For example, in a unified TCI state framework, when a higher layer parameter related to the second QCL type RS is configured to be enabled (for example, enable), the UE may judge that the second QCL type RS has been configured, and may determine the UL/DL spatial domain filter. In this case, the UE may determine, on the basis of a method mentioned above, a second QCL type RS to be used.

According to the above fourth embodiment, it is possible to appropriately determine a second QCL type RS even when a TCI state pool for each individual CC is configured for the UE by RRC.

### <Fifth Embodiment>

In a fifth embodiment, option 2-B mentioned above will be described in detail. In option 2-B mentioned above, a common TCI state pool is configured for each CC/BWP in a manner similar to that of option 2-A.

A UE may use a second QCL type (for example, QCL type D) RS with each common TCI state by using a common TCI state pool configured for each CC/BWP. A constraint that a QCL source RS of a DMRS (PDCCH DMRS/PDSCH DMRS) of each CC/BWP is in a relationship of QCL type D for each CC/BWP may be applied.

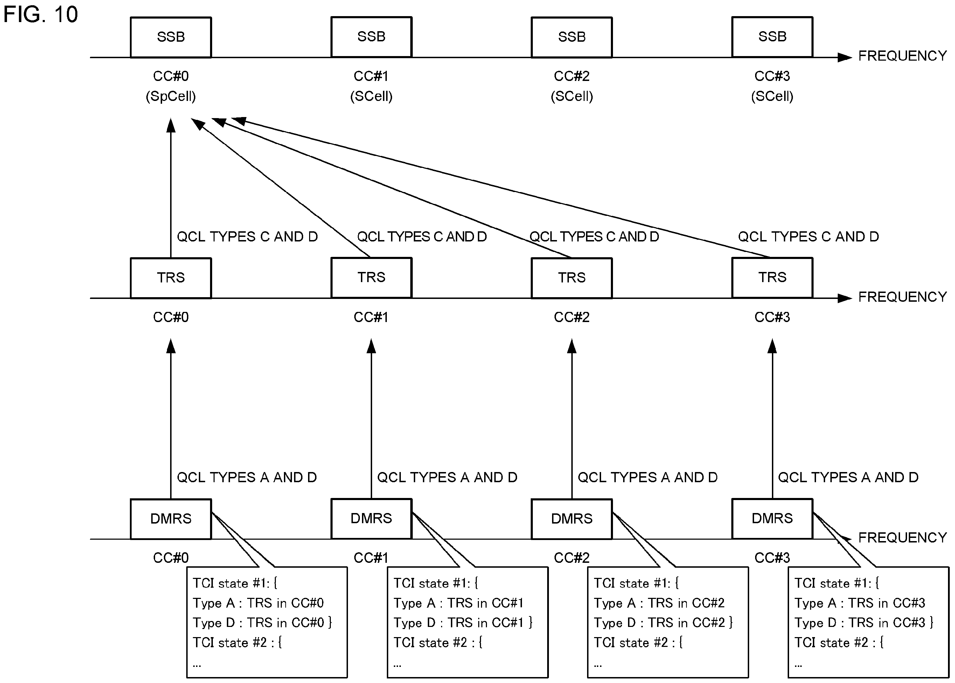

FIG. 10 is a diagram to show an example of QCL type D RS configuration according to the fifth embodiment. In the example shown in FIG. 10, a TRS of each CC is in relationships of QCL types C and D with an SSB of CC #0. A DMRS of each CC (PDCCH DMRS/PDSCH DMRS) is in a relationship of QCL type A with a TRS of the same CC. In this case, the DMRS of each CC may be in a relationship of QCL type D with the TRS of the same CC. Thus, in the fifth embodiment, a common SSB may be configured as an "associated SSB" for a TRS of each CC/BWP.

According to the above fifth embodiment, even when a TCI state pool for each individual CC is configured for the UE by RRC, it is possible to appropriately determine a second QCL type RS while securing compatibility with Rel. 15.

### <Sixth Embodiment>

In a sixth embodiment, a timing from indication of a DCI-based beam (for example, a common TCI state) to application of the beam will be described.

In the present disclosure, a timing from indication of a DCI-based beam (for example, a common TCI state) to application of the beam, beam application time, a period until beam application, and the like may be interchangeably interpreted.

In the present disclosure, a timing of a start of the beam application time may be a timing of a start of reception (or an end of reception) of DCI to indicate application of the beam (for example, the common TCI state) (for example, a symbol, a slot, or a specific time unit). The timing of the start of the beam application time may be a timing of a start of transmission (or an end of transmission) of HARQ-ACK information for DCI to indicate application of the beam (for example, the common TCI state) (for example, a symbol, a slot, or a specific time unit).

Note that for the DCI to indicate the application of the beam, an arbitrary DCI format defined in Rel. 16 (or earlier versions) may be used, or a new DCI format defined in Rel. 17 (or later versions) may be used.

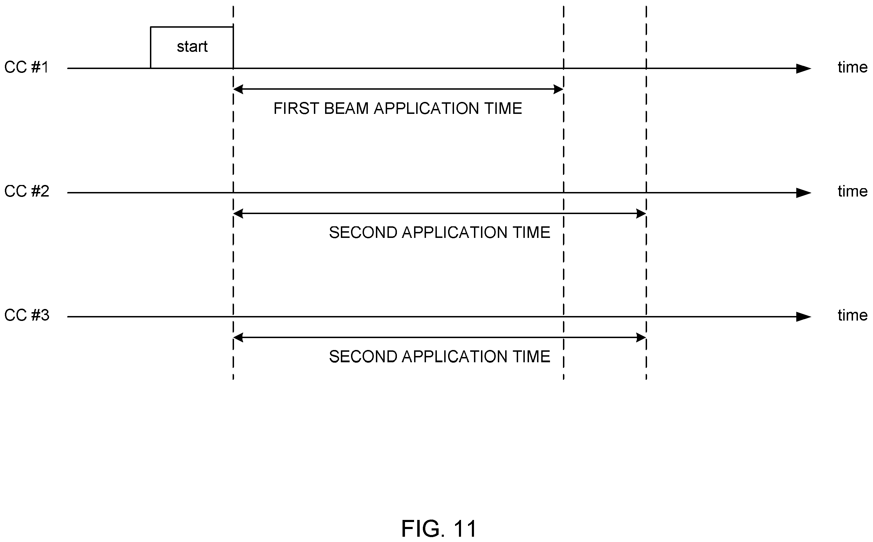

In the present disclosure, beam application time for a CC/BWP in which the DCI to indicate the application of the beam is received may be referred to as first beam application time. Also, beam application time for a CC/BWP different from the CC/BWP in which the DCI to indicate the application of the beam is received may be referred to as second beam application time (see FIG. 11).

The UE may assume that the first beam application time and the second beam application time are defined/configured/indicated so as to be the same/different from each other. For example, the UE may assume that the second beam application time is defined/configured/indicated so as to be longer (or shorter) than the first beam application time or so as to be equal to the first beam application time (Embodiment 6-1).

When managing a unified TCI state framework in CA, the UE may assume that beam application time for a plurality of (for example, all) CCs included in a CC list for an application destination of a unified TCI state (applied CC list) is defined/configured/indicated so as to be equal to each other (Embodiment 6-2). According to this method, beam application time varies for each CC, and thus a TCI state for each CC varies, thereby allowing a situation in which appropriate CA is unavailable to be avoided.

The UE may assume that beam application time being the same as the longest beam application time out of beam application time for respective CCs included in the applied CC list is defined/configured/indicated.

The UE may assume that beam application time being the same as the shortest beam application time out of beam application time for the respective CCs included in the applied CC list is defined/configured/indicated.

### «Beam Application Time Configuration/Indication Method»

### [Method 1]

Beam application time may be configured for the UE for each CC/each BWP in a CC. The UE may receive information related to configuration of the beam application time for each CC/each BWP in the CC by using higher layer signaling (for example, RRC signaling).

In this case, beam application time for respective CCs/BWPs may be different from each other, or may be a common value.

### [Method 2]

Beam application time may be configured for the UE for each band (or each plurality of CCs/BWPs). The UE may receive information related to configuration of the beam application time for each plurality of CCs/BWPs by using higher layer signaling (for example, RRC signaling).

Beam application time for respective CCs/BWPs may be different from each other, or may be a common value. For example, beam application time applicable in all CCs may be computed on the basis of UE process time in respective CCs, and the beam application time for the respective CCs/BWPs may be a common value.

When the beam application time for the respective CCs/BWPs are different from each other, the UE may receive information related to the beam application time for the respective CCs/BWPs.

When the beam application time for the respective CCs/BWPs are different from each other, the UE may receive information related to beam application time for a given CC/BWP, and may determine beam application time for another CC/BWP on the basis of a specific rule. For example, the UE may receive information related to first beam application time, and may determine second beam application time on the basis of a specific rule.

The specific rule may be a case that a specific offset value for the first beam application time is notified to the UE, and that the UE determines the second beam application time by adding/subtracting the specific offset value to/from the first beam application time.

The specific offset value may be configured for the UE by using higher layer signaling, may be defined beforehand in specifications, or may be reported to a NW as UE capability information.

### [Method 3]

Beam application time may be configured for the UE for each applied CC list. The UE may receive information related to configuration of the beam application time for each applied CC list by using higher layer signaling (for example, RRC signaling). According to method 3, a situation in which beam application time varies depending on the numbers of CCs included in each applied CC list or on bands can be supported.

### [Method 4]

Beam application time may be configured for the UE for each common TCI state. The UE may receive information related to configuration of the beam application time for each common TCI state by using higher layer signaling (for example, RRC signaling)/DCI. According to method 4, different beam application time can be configured for each TCI state to be indicated, and beam application time can be indicated by using DCI.

### <Seventh Embodiment>

In a unified TCI state in CA, which CC a TCI state is applied to may be indicated for a UE for each DCI.

In this case, the DCI may include information for indicating a TCI state application destination CC/BWP. For example, one or more applied CC lists may be configured for the UE beforehand by using higher layer signaling, and an application destination CC may be dynamically switched by indicating one of the lists by using the DCI.

PDSCHs in a plurality of CCs may be scheduled for the UE by a DCI, and a CC/BWP to which a TCI state is applied may be dynamically indicated by the DCI.

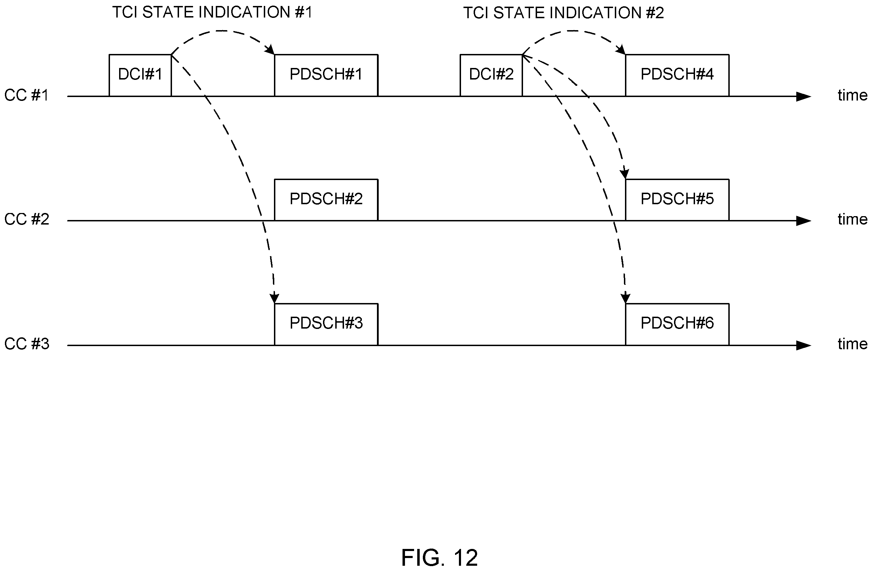

FIG. 12 is a diagram to show an example of TCI state indication for the plurality of CCs by a DCI. In FIG. 12, the UE receives DCI #1 to schedule PDSCH #1 in CC #1 and PDSCH #3 in CC #3. The UE receives DCI #2 to schedule PDSCH #4 in CC #1, PDSCH #5 in CC #2, and PDSCH #6 in CC #3. DCI #1 includes TCI state indication (indication information) #1 for indicating a TCI state applied to PDSCH #1 (DMRS for PDSCH #1) and a TCI state applied to PDSCH #3 (DMRS for PDSCH #3). DCI #2 includes TCI indication #2 for indicating a TCI state applied to PDSCH #4 (DMRS for PDSCH #4), a TCI state applied to PDSCH #5 (DMRS for PDSCH #5), and a TCI state applied to PDSCH #6 (DMRS for PDSCH #6). The UE determines, on the basis of TCI state indication included in the DCI, a TCI state to be applied to each PDSCH (PDSCH DMRS).

According to an above seventh embodiment, more flexible and more dynamic application of a unified TCI state using DCI can be performed.

### (Radio Link Monitoring (RLM))

In NR, radio link monitoring (RLM) is used.

In NR, a base station may configure, for a UE, a radio link monitoring reference signal (Radio Link Monitoring RS (RLM-RS)) for each BWP by using higher layer signaling. The UE may receive RLM configuration information (for example, an information element "RadioLinkMonitoringConfig" of RRC).

The RLM configuration information may include failure detection resource configuration information (for example, a higher layer parameter "failureDetectionResourcesToAddModList"). The failure detection resource configuration information may include a parameter related to the RLM-RS (for example, a higher layer parameter "RadioLinkMonitoringRS").

The parameter related to the RLM-RS may include information indicating that the parameter corresponds to the purpose of RLM, an index corresponding to a resource of the RLM-RS (for example, an index included in a higher layer parameter "failureDetectionResources" (RadioLinkMonitoringRS in failureDetectionResourcesToAddModList)), and the like. For example, the index may be a CSI-RS resource configuration index (for example, a non-zero power CSI-RS resource ID), or may be an SS/PBCH block index (SSB index). The information about the purpose may indicate beam failure, (cell level) Radio Link Failure (RLF), or both of them.

The UE may identify an RLM-RS resource on the basis of the index corresponding to the resource of the RLM-RS, and may perform RLM by using the RLM-RS resource.

In RLM procedure in Rel. 16, the UE follows implicit RLM-RS determination procedure below.

### [Implicit RLM-RS Determination Procedure]

If the RLM-RS (RadioLinkMonitoringRS) is not provided for the UE, and a TCI state including one or more CSI-RSs for PDCCH reception is provided for the UE, the UE follows procedure 1 to procedure 4 below.

### [[Procedure 1]]

If an active TCI state for the PDCCH reception includes only one RS, the UE uses, for RLM, that RS provided for the active TCI state for the PDCCH reception.

### [[Procedure 2]]

If the active TCI state for the PDCCH reception includes two RSs, the UE assumes that one RS has QCL type D, and the UE uses, for RLM, that RS having QCL type D. The UE does not assume that both of the RSs have QCL type D.

### [[Procedure 3]]

The UE is not required to use an aperiodic or semi-persistent RS for RLM.

### [[Procedure 4]]

For Lₘₐₓ = 4, the UE selects, in order starting from the lowest monitoring periodicity, N_{RLM} RSs provided for the active TCI state for the PDCCH reception in a plurality of CORESETs associated with a plurality of search space sets. If more than one CORESET is associated with a plurality of search space sets having the same monitoring periodicity, the UE determines a CORESET order starting from the highest CORESET index.

Here, Lₘₐₓ is a maximum number of SS/PBCH block indexes in a cell. A maximum number of SS/PBCH blocks transmitted in a half-frame is Lₘₐₓ.

Thus, when the RLM-RS is not provided for the UE, the UE performs implicit RLM-RS determination, and uses, for RLM, an active TCI state for the PDCCH reception. When Lₘₐₓ = 4, the UE selects N_{RLM} RSs firstly in ascending order of monitoring periodicities of the search space sets, and subsequently in descending order of CORESET indexes. The UE selects a

### CORESET.

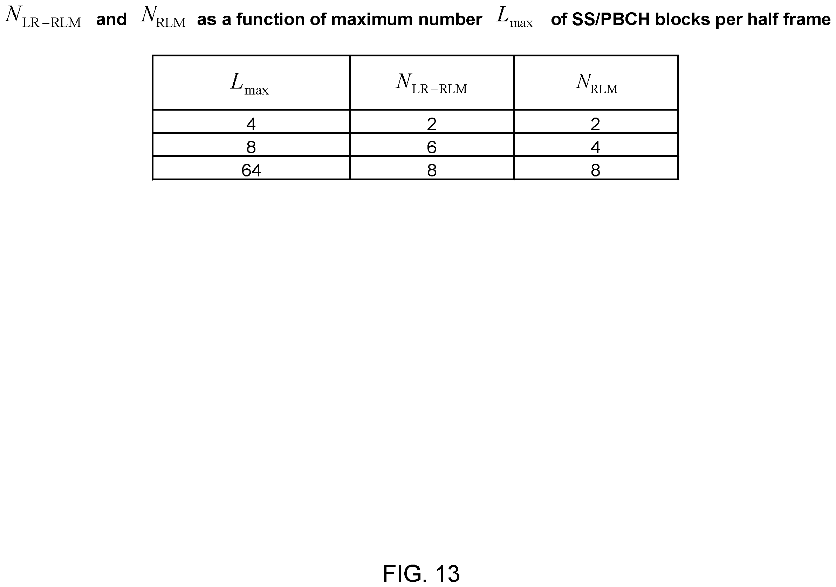

Up to N_{LR-RLM} RLM-RSs for link recovery procedure and RLM can be configured for the UE. Up to N_{RLM} RLM-RSs out of N_{LR-RLM} RLM-RSs are used for the RLM depending on Lₘₐₓ. In Rel. 16, as shown in FIG. 13, N_{RLM} = 2 when Lₘₐₓ = 4, N_{RLM} = 4 when Lₘₐₓ = 8, and N_{RLM} = 8 when Lₘₐₓ = 64.

### (Beam Failure Detection (BFD)/Beam Failure Recovery (BFR))

In NR, communication is performed by using beam forming. For example, a UE and a base station (for example, a gNB (gNodeB)) may use a beam used for signal transmission (also referred to as a transmit beam, Tx beam, or the like) and a beam used for signal reception (also referred to as a receive beam, Rx beam, or the like).

Using the beam forming is susceptible to interference from an obstruction, and thus it is assumed that radio link quality deteriorates. Due to deterioration of the radio link quality, radio link failure (RLF) may occur frequently. Occurrence of the RLF requires reconnection of a cell, and thus frequent occurrence of the RLF causes deterioration of system throughput.

In NR, in order to suppress occurrence of the RLF, procedure for switching to another beam (which may be referred to as beam recovery (BR), beam failure recovery (BFR), L1/L2 (Layer 1/Layer 2) beam recovery, or the like) is performed when quality of a specific beam deteriorates. Note that the BFR procedure may be simply referred to as BFR.

Note that beam failure (BF) in the present disclosure may be referred to as link failure.

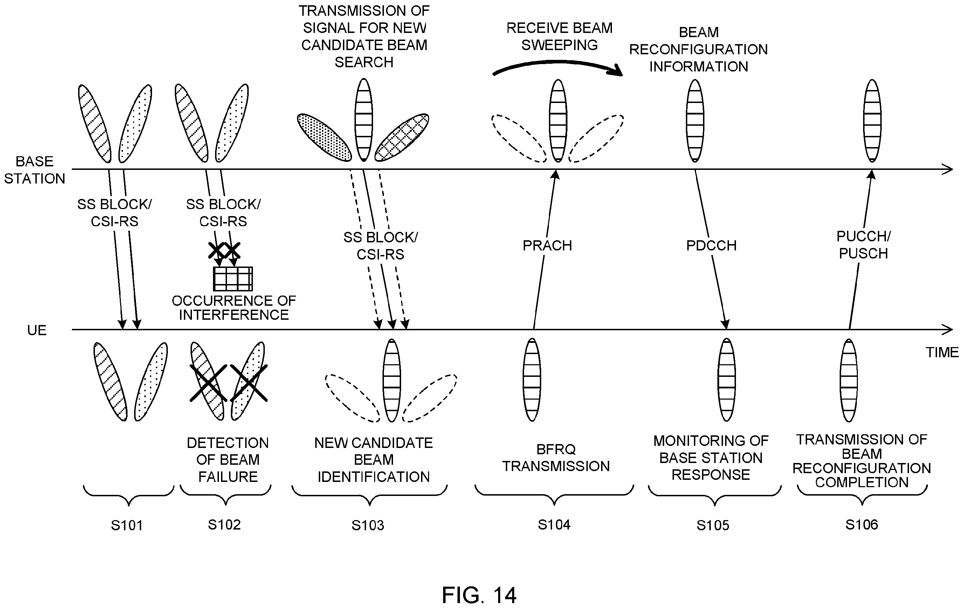

FIG. 14 is a diagram to show an example of the beam recovery procedure in Rel-15 NR. The number of beams and the like are just examples, and are not limited to this. In an initial state (step S101), the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding, changing, or the like these signals. The RS measured in step S101 may be referred to as an RS for beam failure detection (Beam Failure Detection RS (BFD-RS)), an RS for use in beam recovery procedure (BFR-RS), or the like.

At step S102, due to interference of a radio wave from the base station, the UE fails to detect the BFD-RS (or quality of reception of the RS deteriorates). Such interference may occur due to, for example, influence of an obstruction, phasing, interference, and the like between the UE and the base station.

The UE detects beam failure when a given condition is satisfied. For example, the UE may detect occurrence of the beam failure when a BLER (Block Error Rate) is less than a threshold value for all of configured BFD-RSs (BFD-RS resource configurations). When occurrence of the beam failure is detected, a lower layer (physical (PHY) layer) of the UE may notify (indicate) a beam failure instance for a higher layer (MAC layer).

Note that judgment standards (criteria) are not limited to the BLER, and may be reference signal received power in the physical layer (Layer 1 Reference Signal Received Power (L1-RSRP)). In place of the RS measurement or in addition to the RS measurement, beam failure detection may be performed on the basis of a downlink control channel (Physical Downlink Control Channel (PDCCH)) or the like. The BFD-RS may be expected to be quasi-co-location (QCL) with a DMRS for a PDCCH monitored by the UE.

Here, QCL is an indicator indicating statistical properties of the channel. For example, when a given signal/channel and another signal/channel are in a relationship of QCL, it may be indicated that it is assumable that at least one of a Doppler shift, a Doppler spread, an average delay, a delay spread, and a spatial parameter (for example, a spatial reception parameter (Spatial Rx Parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to the BFD-RS (for example, indices, resources, numbers, the number of ports, precoding, and the like for the RS), information related to the beam failure detection (BFD) (for example, the above-mentioned threshold value), and the like may be configured (notified) for the UE by using higher layer signaling or the like. The information related to the BFD-RS may be referred to as information related to resources for BFR or the like.

The higher layer (for example, the MAC layer) of the UE may start a given timer (which may be referred to as a beam failure detection timer) when receiving beam failure instance notification from the PHY layer of the UE. The MAC layer of the UE may trigger BFR (for example, start any one of random access procedures mentioned below) when receiving the beam failure instance notification given times (for example, beamFailureInstanceMaxCount configured by RRC) or more until the timer expires.

When there is no notification from the UE or when receiving a given signal (beam recovery request at step S104) from the UE, the base station may judge that the UE has detected beam failure.

At step S103, for beam recovery, the UE starts a search for a new candidate beam for use in new communication. The UE may select, by measuring a given RS, the new candidate beam corresponding to the RS. The RS measured at step S103 may be referred to as a new candidate RS, an RS for new candidate beam identification (New Candidate Beam Identification RS (NCBI-RS)), a CBI-RS, a CB-RS (Candidate Beam RS), or the like. The NCBI-RS may be the same as the BFD-RS, or may be different from the BFD-RS. Note that the new candidate beam may be simply referred to as a candidate beam or a candidate RS.

The UE may determine a beam corresponding to an RS satisfying a given condition as the new candidate beam. For example, the UE may determine the new candidate beam on the basis of an RS with L1-RSRP exceeding a threshold value out of configured NCBI-RSs. Note that judgment standards (criteria) are not limited to the L1-RSRP. The L1-RSRP related to an SSB may be referred to as SS-RSRP. The L1-RSRP related to a CSI-RS may be referred to as CSI-RSRP.

Information related to the NCBI-RS (for example, resources, numbers, the number of ports, precoding, and the like for the RS), information related to new candidate beam identification (NCBI) (for example, the above-mentioned threshold value), and the like may be configured (notified) for the UE by using higher layer signaling or the like. Information related to the new candidate RS (or the NCBI-RS) may be obtained on the basis of information related to the BFD-RS. The information related to the NCBI-RS may be referred to as information related to NCBI resources or the like.

Note that the BFD-RS, the NCBI-RS, and the like may be interpreted as a radio link monitoring reference signal (Radio Link Monitoring RS (RLM-RS)).

At step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted by using, for example, at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant (CG) PUSCH.

The BFRQ may include information about the new candidate beam/new candidate RS identified at step S103. Resources for the BFRQ may be associated with the new candidate beam. The information about the beam may be notified by using a beam index (BI), a port index of a given reference signal, an RS index, a resource index (for example, a CSI-RS resource indicator (CRI)) or an SSB resource indicator (SSBRI)), or the like.

For Rel-15 NR, CB-BFR (Contention-Based BFR) that is BFR based on contention-based random access (RA) procedure and CF-BFR (Contention-Free BFR) that is BFR based on non-contention-based random access procedure are under study. In the CB-BFR and the CF-BFR, the UE may transmit a preamble (also referred to as an RA preamble, a random access channel (Physical Random Access Channel (PRACH)), a RACH preamble, or the like) as the BFRQ by using a PRACH resource.

In the CB-BFR, the UE may transmit a preamble randomly selected from one or a plurality of preambles. On the other hand, in the CF-BFR, the UE may transmit a preamble allocated from the base station in a UE-specific manner. In the CB-BFR, the base station may allocate same preambles to a plurality of UEs. In the CF-BFR, the base station may allocate a preamble in a UE-dedicated manner.

Note that the CB-BFR and the CF-BFR may be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may be referred to as CBRA for BFR. The CFRA-BFR may be referred to as CFRA for BFR.

In both of the CB-BFR and the CF-BFR, information related to the PRACH resource (RA preamble) may be notified by, for example, higher layer signaling (RRC signaling or the like). For example, the information may include information indicating correspondence between detected DL-RSs (beams) and PRACH resources, and a different PRACH resource may be associated with each DL-RS.

At step S105, the base station that has detected the BFRQ transmits a response signal (which may be referred to as a gNB response or the like) in response to the BFRQ from the UE. The response signal may include reconfiguration information about one or a plurality of beams (for example, DL-RS resource configuration information).

The response signal may be transmitted in, for example, a UE-common search space of a PDCCH. The response signal may be notified by using a PDCCH (DCI) cyclic redundancy check (CRC)-scrambled by a UE identifier (for example, a cell-radio RNTI (C-RNTI)). The UE may judge, on the basis of beam reconfiguration information, at least one of a transmit beam and a receive beam to be used.

The UE may monitor the response signal on the basis of at least one of a control resource set (COntrol REsource SET (CORESET)) for BFR and a search space set for BFR.

With respect to the CB-BFR, when the UE receives a PDCCH corresponding to a C-RNTI related to the UE itself, it may be judged that contention resolution has succeeded.

With respect to processing at step S105, a period for the UE to monitor response from the base station (for example, gNB) to the BFRQ may be configured. The period may be referred to as, for example, a gNB response window, a gNB window, a beam recovery request response window, or the like. The UE may perform retransmission of the BFRQ when there is no gNB response detected in the window period.

At step S106, the UE may transmit, to the base station, a message indicating that beam reconfiguration has been completed. For example, the message may be transmitted on a PUCCH, or may be transmitted on a PUSCH.

Beam recovery success (BR success) may represent, for example, a case where step S106 has been reached. On the other hand, beam recovery failure (BR failure) may correspond to, for example, a case that BFRQ transmission has reached a given number of times or a case that a beam failure recovery timer (Beam-failure-recovery-Timer) has expired.

In Rel. 15, a case that beam recovery procedure (for example, BFRQ notification) for beam failure detected in an SpCell (PCell/PSCell) is performed by using random access procedure is supported. On the other hand, in Rel. 16, a case that beam recovery procedure (for example, BFRQ notification) for beam failure detected in an SCell is performed by using at least one of BFR PUCCH (for example, scheduling request (SR)) transmission and BFR MAC CE (for example, UL-SCH) transmission is supported.

For example, the UE may transmit information related to beam failure by using two MAC CE-based steps. The information related to the beam failure may include information related to a cell in which the beam failure has been detected and information related to a new candidate beam (or a new candidate RS index).

### [Step 1]

When BF has been detected, a PUCCH-BFR (scheduling request (SR)) may be transmitted from the UE to the PCell/PSCell. Subsequently, a UL grant (DCI) for step 2 described below may be transmitted from the PCell/PSCell to the UE. In a case where beam failure has been detected, when a MAC CE (or a UL-SCH) for transmitting information related to a new candidate beam is present, step 1 (for example, PUCCH transmission) may be omitted to perform step 2 (for example, MAC CE transmission).

### [Step 2]

Subsequently, the UE may transmit, to the base station (PCell/PSCell), information (for example, a cell index) related to a (unsuccessful) cell in which the beam failure has been detected and the information related to the new candidate beam by using the MAC CE via an uplink channel (for example, a PUSCH). After that, after BFR procedure, QCL of a PDCCH/PUCCH/PDSCH/PUSCH may be updated to a new beam after a given period (for example, 28 symbols) from reception of a response signal from the base station.

Note that these step numbers are just numbers for description, and a plurality of steps may be combined with each other, or the order of the steps may be changed. Whether to perform the BFR may be configured for the UE by using higher layer signaling.

### (BFD-RS)

In Rel. 16, for each BWP of one serving cell, set qo bar of periodic (P)-CSI-RS resource configuration indexes and set q₁ bar of at least one of P-CSI-RS resource configuration indexes and SS/PBCH block indexes can be provided for the UE by failure detection resources (failureDetectionResources, failureDetectionResourcesToAddModList, RadioLinkMonitoringConfig) and a candidate beam RS list (candidateBeamRSList), an extended candidate beam RS list (candidateBeamRSListExt-r16), or a candidate beam RS list for an SCell (candidateBeamRSSCellList-r16), respectively.

Here, qo bar is an expression in which an overline is added to "qo." Hereinafter, qo bar is simply expressed as qo. q₁ bar is an expression in which an overline is added to "qi." Hereinafter, q₁ bar is simply expressed as q₁.

Set qo of P-CSI-RS resources provided by the failure detection resources may be referred to as an explicit BFD-RS.

The UE may perform L1-RSRP measurement and the like by using RS resources corresponding to indexes included in at least one set of set qo and set q₁ to detect beam failure.

Note that in the present disclosure, a case that the above-mentioned higher layer parameter indicating information about an index corresponding to a BFD resource is provided and each of a case that a BFD resource is configured, a case that a BFD-RS is configured, and the like may be interchangeably interpreted. In the present disclosure, the BFD resource, set qo of periodic CSI-RS resource configuration indexes or SSB indexes, a BFD-RS, a BFD-RS set, and an RS set may be interchangeably interpreted.

For one BWP of that serving cell, if qo is not provided for the UE by failure detection resources (failureDetectionResources), the UE determines, in accordance with implicit BFD-RS determination procedure below, an RS (set qo) to be used for BFD procedure.

### [Implicit BFD-RS Determination Procedure]

The UE determines that a P-CSI-RS resource configuration index having the same value as an RS index in an RS set indicated by a TCI state (TCI-State) for a corresponding CORESET used by the UE for PDCCH monitoring is included in set qo. If two RS indexes are present in one TCI state, set qo includes an RS index having a QCL type D configuration for a corresponding TCI state. The UE assumes that set qo includes up to two RS indexes. The UE assumes a single port RS in set qo.

This set qo may be referred to as an implicit BFD-RS.

Thus, the UE determines the BFD-RS (RS set) by using a PDCCH TCI state. The UE assumes that the RS set includes up to two RSs.

### (Analysis)

In a unified TCI framework in CA, an RS to be used for RLM/BFD is indefinite. For example, which RS in which cell an RS used for RLM when the above-mentioned implicit RLM-RS determination procedure is used is, and which RS in which cell an RS used for BFD when the above-mentioned implicit BFD-RS determination procedure is used is are indefinite.

Unless the RS used for the RLM/BFD is definite, accuracy of the RLM/BFD may deteriorate, and communication quality, throughput, and the like may deteriorate.

Thus, the inventors of the present invention came up with the idea of a method for configuring an RS used for RLM/BFD when a common TCI state is configured.

### <Eighth Embodiment>

### <<Embodiment 8-1>>

In option 1-A and option 2-A mentioned above, in a common TCI state for respective CCs, a QCL type D RS may be a QCL type D RS of a specific CC, and a QCL type A RS may be a QCL type D RS of the same CC. The common TCI state may be applied to a PDSCH/PDCCH (DMRS).

In this case, the QCL type A RS and the QCL type D RS can be RSs of different CCs (can refer to RSs of different CCs).

As mentioned above, in implicit RLM-RS determination procedure in a case where an RLM-RS is not provided for a UE, when a TCI state for PDCCH reception includes only one RS, the UE uses one RS in the TCI state for RLM, and when the TCI state for the PDCCH reception includes two RSs, the UE uses a QCL type D RS in the TCI state for the RLM.

The UE performs the RLM in a PCell/PSCell, and thus it is preferable that the RLM is based on quality of an RLM-RS in the PCell/PSCell. Thus, it is preferable that the RLM-RS is an RS of the PCell/PSCell (refers to an RS of the PCell/PSCell).

The specific CC may be a PCell/PSCell. In option 1-A and option 2-A, in the TCI state for the PDSCH/PDCCH (DMRS), a QCL type D RS configured in common for a plurality of CCs may be the RS of the PCell/PSCell. The QCL type D RS common to the plurality of CCs may not be an RS of the SCell (may not refer to an RS of the SCell).

A case that when the UE determines the RLM-RS in accordance with the above-mentioned implicit RLM-RS determination procedure, the RS of the PCell/PSCell is always configured in the TCI state for the PDSCH/PDCCH (DMRS) as the QCL type D RS common to the plurality of CCs may be defined.

A case that when the UE determines the RLM-RS in accordance with the above-mentioned implicit RLM-RS determination procedure, the RS of the PCell/PSCell is always configured in the TCI state for the PDSCH/PDCCH (DMRS) as the QCL type D RS of at least the PCell/PSCell may be defined.

As shown in the example of FIG. 6, the QCL type D RS in the common TCI state (TCI state for at least the PDCCH) for an SpCell (PCell/PSCell) may be a TRS of the SpCell (CC #0). In this configuration, when the RLM-RS is not configured, the UE uses the TRS of the SpCell for RLM in accordance with the above-mentioned implicit RLM-RS determination procedure.

As shown in the example of FIG. 7, the QCL type D RS in the common TCI state (TCI state for at least the PDCCH) for an SpCell (PCell/PSCell) may be an SSB of the SpCell (CC #0). In this configuration, when the RLM-RS is not configured, the UE uses the SSB of the SpCell for RLM in accordance with the above-mentioned implicit RLM-RS determination procedure.

The common TCI state may be configured/indicated by an RRC IE/MAC CE/DCI.

When a single TRP is used, the UE may apply one common TCI state to multiple types of (UL/DL) channels/signals.

The UE may apply one common TCI state to all CORESETs, or may apply one common TCI state to a specific CORESET. The specific CORESET may be CORESET 0. In a manner similar to that of Rel. 15, when a TCI state is configured for CORESET 0, the UE may use the configured TCI state for PDCCH reception, and when the TCI state is not configured for CORESET 0, the UE may use, for PDCCH reception, an SSB identified during the latest random access procedure (not initiated by a PDCCH order) (the UE may assume that a DMRS antenna port for PDCCH reception in CORESET 0 is QCLed with the SSB), and may use a common TCI state for PDCCH reception in a CORESET other than CORESET 0.

In the implicit RLM-RS determination procedure, the UE selects a CORESET on the basis of monitoring periodicities/CORESET indexes (CORESET selection rule), and uses, for RLM, a TCI state for the selected CORESET. When the same common TCI state is applied to all/a plurality of CORESETs, the UE may not use the CORESET selection rule. When the RLM-RS is not configured, the UE may use, for RLM, a common TCI state applied to CORESETs of the PCell. When both a QCL type A RS and a QCL type D RS are configured for the common TCI state, the UE may use the QCL type D RS for the RLM.

When multiple TRPs are used, the UE may apply a plurality of (M) common TCI states to multiple types of (UL/DL) channels/signals.

The UE may use, for RLM, M RSs in M common TCI states (may perform RLM for each TRP). The UE may select one RS from M RSs on the basis of an RS selection rule, and may use the selected RS for RLM. The RS selection rule may select an RS corresponding to any one of the lowest TRP index, the lowest CORESET pool index, and the first TCI state indicated by the DCI. In a manner similar to that of a case of the single TRP, when the RLM-RS is not configured, the UE may use, for the RLM, a common TCI state applied to CORESETs of the PCell. When both a QCL type A RS and a QCL type D RS are configured for the common TCI state, the UE may use the QCL type D RS for the RLM.

### <<Embodiment 8-2>>

A QCL type D RS with a common TCI state may always be an RS of a PCell/PSCell. When an RLM-RS is not configured, the UE may determine the RS of the PCell/PSCell as the QCL type D RS with the common TCI state, and may use the QCL type D RS with the common TCI state for RLM (in accordance with the implicit RLM-RS determination procedure). The UE may determine a common TCI state for respective cells in accordance with any one of common TCI state determination method 1 to common TCI state determination method 3 below.

### [Common TCI State Determination Method 1]

With respect to option 1-A, a case where the QCL type D RS is a CSI-RS (case 4) will be described.

On the basis of a TCI state in an individual TCI state pool configured by RRC, a single RS indicated by a common TCI state ID may be used for indication of the QCL type D RS across a configured CC set.

QCL type A RS configuration information indicating a QCL type A RS for a target cell (cell to which the TCI state is applied) may include at least one of source cell information indicating a source cell (cell in which an RS indicated by the TCI state is transmitted, cell having an RS referred to by the TCI state) and source RS information indicating a source RS of the cell (RS referred to by the TCI state). The source cell information may be information indicating the target cell, or may be a cell ID. The information indicating the target cell may be explicitly notified, and when the source cell information (cell ID) is not explicitly notified, the source RS information may indicate an RS of the target cell. A source RS of the QCL type A RS may be a CSI-RS (for example, a TRS).

The QCL type A RS is the RS of the target cell when following Rel. 15. In this case, the QCL type A RS configuration information may include the information indicating the target cell, may not include the information indicating the target cell, or may not include the source cell information.

QCL type D RS configuration information indicating a QCL type D RS for the target cell may include at least one of source cell information and source RS information about the cell. The QCL type D RS configuration information may not include the source cell information, or may include information indicating a PCell/PSCell.

The QCL type D RS configuration information for each of a plurality of cells may be QCL type D RS configuration information common to the plurality of cells.

At least one piece of information about a QCL type D RS for each of the plurality of cells may not be explicitly configured/indicated.

In the QCL type D RS configuration information for the target cell, the source RS information may not be explicitly configured. When the QCL type D RS configuration information includes the source cell information, the UE may use, as the QCL type D RS, a QCL type A RS for the source cell.

In the QCL type D RS configuration information for the target cell, the source cell information may not be explicitly configured. The UE may select the source cell in accordance with a cell selection rule. The cell selection rule may select a cell/BWP having the lowest/highest ID in a CC list, or may select the PCell/PSCell. When the source cell information is not configured in the QCL type D RS configuration information for the target cell, the UE may determine, as a QCL type D RS of the target cell, a source RS indicated by QCL type D RS configuration information about the selected cell. For example, when the QCL type D RS configuration information for the target cell does not include the source cell information, the UE may determine, as the QCL type D RS of the target cell, a QCL type D RS or a CSI-RS (TRS) of the PCell/PSCell.

The QCL type D RS configuration information for the target cell may include the source cell information, and an RLM-RS may be configured. In this case, the UE does not use the RLM-RS determination procedure and uses the configured RLM-RS, and thus an issue does not occur even if a QCL type D RS with a TCI state for a PDCCH of the PCell is an RS of the SCell.

When the QCL type D RS configuration information for the target cell includes the source cell information, and the source cell is the SCell (is not the PCell/PSCell), the UE may ignore the QCL type D RS configuration information, and may determine, as the QCL type D RS of the target cell, a QCL type D RS or a CSI-RS (TRS) of the PCell/PSCell.

When the QCL type D RS configuration information for the target cell includes the source cell information, the source cell may be the PCell/PSCell.

Both information indicating a cell and information indicating an RS may not be configured for the QCL type D RS for the target cell. The UE may select the source cell in accordance with the cell selection rule, and may determine, as the QCL type D RS, a QCL type A RS or a CSI-RS (TRS) of the source cell. Whether the QCL type D RS has been configured (QCL type D RS is enabled) may be configured/indicated. When the QCL type D RS has been configured, the UE may determine a UL/DL spatial domain filter in accordance with the QCL type D RS. In a unified TCI framework, when a case that a QCL type D RS is enabled (enable) has been configured, the UE may determine the QCL type D RS, and may determine a UL/DL spatial domain filter in accordance with the QCL type D RS.

### [Common TCI State Determination Method 2]

With respect to option 1-A, a case where the QCL type D RS is an SSB will be described.

On the basis of a TCI state in an individual TCI state pool configured by RRC, a single RS indicated by a common TCI state ID may be used for indication of the QCL type D RS across a configured CC set.

QCL type A RS configuration information indicating a QCL type A RS for a target cell (cell to which the TCI state is applied) may include at least one of source cell information indicating a source cell (cell in which an RS indicated by the TCI state is transmitted, cell having an RS referred to by the TCI state) and source RS information indicating a source RS of the source cell (RS referred to by the TCI state). The source cell information may be information indicating the target cell, or may be a cell ID. The information indicating the target cell may be explicitly notified, and when the source cell information (cell ID) is not explicitly notified, the source RS information may indicate an RS of the target cell. A source RS of the QCL type A RS may be a CSI-RS (for example, a TRS).

The QCL type A RS is the RS of the target cell when following Rel. 15. In this case, the QCL type A RS configuration information may include the information indicating the target cell, may not include the information indicating the target cell, or may not include the source cell information.

QCL type D RS configuration information indicating a QCL type D RS for the target cell may include at least one of source cell information and source RS information about the cell. The QCL type D RS configuration information may not include the source cell information, or may include information indicating a PCell/PSCell.

The QCL type D RS configuration information for each of a plurality of cells may be QCL type D RS configuration information common to the plurality of cells.

At least one piece of information about a QCL type D RS for each of the plurality of cells may not be explicitly configured/indicated.

In the QCL type D RS configuration information for the target cell, the source RS information may not be explicitly configured. When the QCL type D RS configuration information includes the source cell information, the UE may use, as the QCL type D RS, an SSB of the source cell.

In the QCL type D RS configuration information for the target cell, the source cell information may not be explicitly configured. The UE may select the source cell in accordance with a selection rule. The selection rule may select a cell/BWP having the lowest/highest ID in a CC list, or may select the PCell/PSCell. When the source cell information is not configured in the QCL type D RS configuration information for the target cell, the UE may determine, as a QCL type D RS of the target cell, a source RS indicated by QCL type D RS configuration information about the selected cell. For example, when the QCL type D RS configuration information for the target cell does not include the source cell information, the UE may determine, as the QCL type D RS of the target cell, a QCL type D RS or an SSB of the PCell/PSCell.

The QCL type D RS configuration information for the target cell may include the source cell information, and an RLM-RS may be configured. In this case, the UE does not use the RLM-RS determination procedure and uses the configured RLM-RS, and thus an issue does not occur even if a QCL type D RS with a TCI state for a PDCCH of the PCell is an RS of the SCell.

When the QCL type D RS configuration information for the target cell includes the source cell information, and the source cell is the SCell (is not the PCell/PSCell), the UE may ignore the QCL type D RS configuration information, and may determine, as the QCL type D RS of the target cell, a QCL type D RS or an SSB of the PCell/PSCell.

When the QCL type D RS configuration information for the target cell includes the source cell information, the source cell may be the PCell/PSCell.

Both information indicating a cell and information indicating an RS may not be configured for the QCL type D RS for the target cell. The UE may select the source cell in accordance with the selection rule, and may determine, as the QCL type D RS, an SSB of the source cell. Whether the QCL type D RS has been configured (QCL type D RS is enabled) may be configured/indicated. When the QCL type D RS has been configured, the UE may determine a UL/DL spatial domain filter in accordance with the QCL type D RS. In a unified TCI framework, when a case that a QCL type D RS is enabled (enable) has been configured, the UE may determine the QCL type D RS, and may determine a UL/DL spatial domain filter in accordance with the QCL type D RS.

### [Common TCI State Determination Method 3]

Option 2-A will be described. A TCI state pool may be configured for each CC/BWP.

A QCL type D RS with a TCI state pool for each cell may be an RS common to a plurality of CCs.

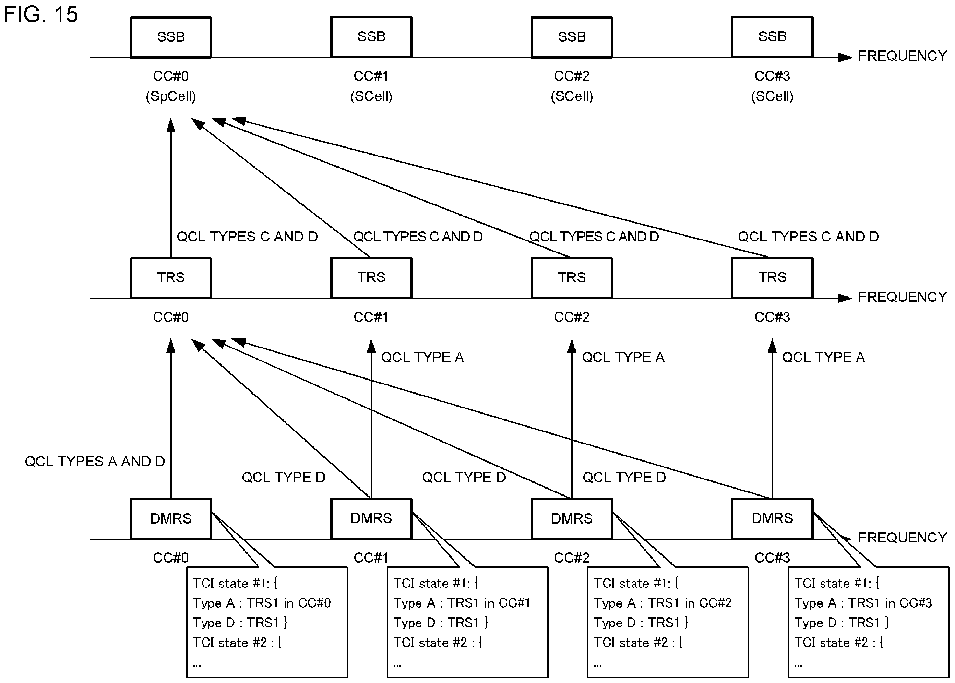

An example of FIG. 15 differs from the example of FIG. 9 in that QCL type D RS configuration information about each cell does not include source cell information. The QCL type D RS configuration information about each cell includes source RS information. In configuration information about a common TCI state for CC #0, QCL type A RS configuration information may indicate CC #0 and TRS 1, and QCL type D RS configuration information may not indicate a CC index, and may indicate TRS 1. In configuration information about a common TCI state for CC #1, QCL type A RS configuration information may indicate CC #1 and TRS 1, and QCL type D RS configuration information may not indicate a CC index, and may indicate TRS 1. In configuration information about a common TCI state for CC #2, QCL type A RS configuration information may indicate CC #2 and TRS 1, and QCL type D RS configuration information may not indicate a CC index, and may indicate TRS 1. In configuration information about a common TCI state for CC #3, QCL type A RS configuration information may indicate CC #3 and TRS 1, and QCL type D RS configuration information may not indicate a CC index, and may indicate TRS 1. TRS 1 in the QCL type D RS configuration information in each CC may indicate TRS 1 of an SpCell. Thus, the UE uses a source RS of the SpCell as a QCL type D RS of each cell.

According to this embodiment, the UE can use an RS of a PCell/PSCell for RLM.

### <Ninth Embodiment>

A method for selecting a CORESET as a common TCI state application destination (target) will be described. A UE may apply a common TCI state to an application destination CORESET, and may not apply the common TCI state to a CORESET other than the application destination CORESET.

Which CORESET the common TCI state is applied to may be defined in specifications. In the common TCI state application destination CORESET, CORESET 0 may be excluded. In other words, the common TCI state may not be applied to CORESET 0. When a TCI state (one or more TCI states (lists) or one or more common TCI states (lists)) is configured for CORESET 0, the UE may apply the common TCI state to CORESET 0. When a TCI state (one or more TCI states (lists) or one or more common TCI states (lists)) is not configured for CORESET 0, the UE may not apply the common TCI state to CORESET 0. In this case, the UE may apply, to CORESET 0, an SSB identified during the latest random access procedure (the UE may assume that a DMRS antenna port for PDCCH reception in CORESET 0 is QCLed with the SSB).

Which CORESET the common TCI state is applied to may be configured by higher layer signaling. For example, a list of CORESET indexes for an application destination of the common TCI state may be configured by higher layer signaling, or a list of CORESET indexes (excluded from the application) not being an application destination of the common TCI state may be configured by higher layer signaling.

According to this embodiment, the UE can appropriately determine a common TCI state application destination CORESET.

### <Tenth Embodiment>

In PCell/PSCell BFR (BFD in a PCell/PSCell), it is preferable that a UE uses an RS of the PCell/PSCell for the BFD.

When a common TCI state (QCL type D RS) follows the eighth embodiment, the UE may use an RS of the PCell/PSCell for the BFD in accordance with the above-mentioned implicit BFD-RS determination procedure.

In SCell BFR (BFD in an SCell), it is preferable that the UE uses an RS of the SCell for the BFD.

If a common TCI state (QCL type D RS) follows the eighth embodiment, the UE fails to use an RS of the SCell for the BFD in accordance with the above-mentioned implicit BFD-RS determination procedure.

When a common TCI state has been configured (or when a common TCI state has been configured, and a QCL type D RS with the common TCI state is an RS of a cell other than a cell as a target of BFD (BFD cell)), the UE may follow either of BFD-RS determination method 1 or BFD-RS determination method 2 below. The BFD cell may be a target cell with the common TCI state, or may be a cell having a PDCCH/PDSCH for an application destination of the common TCI state.

### [BFD-RS Determination Method 1]

The UE uses, for the BFD, a QCL type A RS with a common TCI state for the BFD cell.

### [BFD-RS Determination Method 2]

The UE uses, for BFD in the BFD cell, an RS having the same index (TCI state ID, SSB index, or CSI-RS resource index) as that of a common TCI state or a QCL type D RS for the PCell/PSCell out of common TCI states or RSs for the BFD cell.

In the example of FIG. 6, when a BFD-RS for CC #2 is not configured, the UE may use, for BFD in CC #2, a QCL type A RS (TRS of CC #2) with a common TCI state for CC #2 in accordance with BFD-RS determination method 1. In the example of FIG. 6, when a BFD-RS for CC #2 is not configured, the UE may use, for BFD in CC #2, an RS (TRS of CC #2) having the same TCI state ID or CSI-RS resource index as that of a common TCI state for CC #0 out of common TCI states or CSI-RS resources for CC #0 in accordance with BFD-RS determination method 2.

In the example of FIG. 7, when a BFD-RS for CC #2 is not configured, the UE may use, for BFD in CC #2, a QCL type A RS (TRS of CC #2) in a common TCI state for CC #2 in accordance with BFD-RS determination method 1. In the example of FIG. 7, when a BFD-RS for CC #2 is not configured, the UE may use, for BFD in CC #2, an RS (SSB of CC #2) having the same TCI state ID or SSB index as that of a common TCI state for CC #0 out of common TCI states or SSBs for CC #0 in accordance with BFD-RS determination method 2.

### <Other Embodiments>

A higher layer parameter (RRC IE)/UE capability corresponding to a function (characteristic, feature) in at least one of a plurality of embodiments described above may be defined. The UE capability may indicate that this function is supported.

A UE for which the higher layer parameter (for enabling the function) corresponding to the function has been configured may perform the function. A "case that a UE for which the higher layer parameter corresponding to the function has not been configured does not perform the function (for example, follows Rel. 15/16)" may be defined.

A UE that has reported the UE capability indicating that the function is supported may perform the function. A "case that a UE that has not reported the UE capability indicating that the function is supported does not perform the function (for example, follows Rel. 15/16)" may be defined.

When a UE has reported the UE capability indicating that the function is supported, and the higher layer parameter corresponding to the function has been configured, the UE may perform the function. A "case that when a UE does not report the UE capability indicating that the function is supported or when the higher layer parameter corresponding to the function is not configured, the UE does not perform the function (for example, follows Rel. 15/16)" may be defined.

The UE capability may indicate whether a UE supports this function.

The function may be a unified TCI state framework in CA or a unified TCI state framework applied to a plurality of CCs/BWPs.

The UE capability may include, in a unified TCI state framework, the number (maximum number) of unified TCI states configurable by RRC signaling.

The UE capability may include, in a unified TCI state framework, the number (maximum number) of active unified TCI states configurable by a MAC CE.

The UE capability may indicate whether the UE supports at least one of case 4 and case 5 mentioned above.

The UE capability may indicate whether to support a case that DCI indicates a unified TCI state applied to one or more CCs/BWPs. When not supporting the case that the DCI indicates the unified TCI state applied to one or more CCs/BWPs, the UE can support only a MAC CE-based unified TCI state framework in one CC. In other words, when a unified TCI state is applied to a plurality of BWPs/CCs, the UE may not assume that the unified TCI state is indicated by DCI to perform beam indication.

The UE capability may indicate any one of whether to support function 1 below, whether to support function 2 below, and whether to support both of function 1 and function 2.

### [Function 1]

The UE supports QCL type A TRSs in the same CSI-RS resource/different CSI-RS resources, and supports QCL type D TRSs in the same CSI-RS resource/different CSI-RS resources, if any.

### [Function 2]

The UE supports a QCL type A TRS, and supports a QCL type D SSB, if any.

According to this embodiment, the UE can achieve the above-described function while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

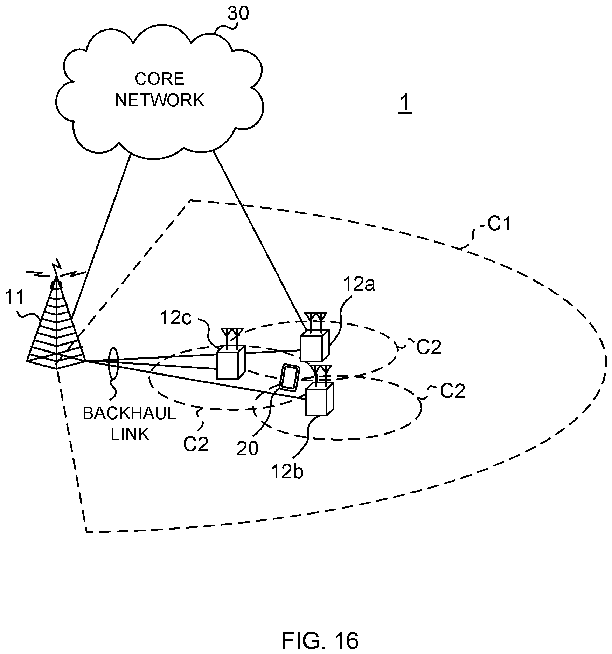

FIG. 16 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

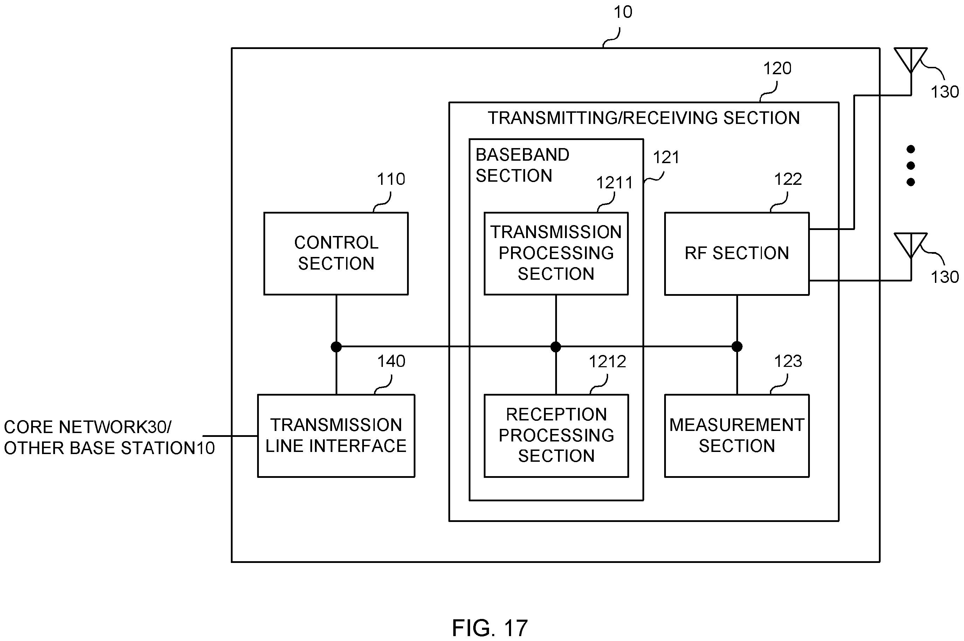

FIG. 17 is a diagram to show an example of a structure of a base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit configuration information about a transmission configuration indication (TCI) state applicable to multiple types of channels in one or more cells. The control section 110 may apply the TCI state to a secondary cell. A first reference signal transmitted in a special cell may be used for a quasi co-location (QCL) type D reference signal for the secondary cell. When a second reference signal for radio link monitoring (RLM) or beam failure detection (BFD) procedure is not configured for the secondary cell, the first reference signal may be used for the procedure.

### (User Terminal)

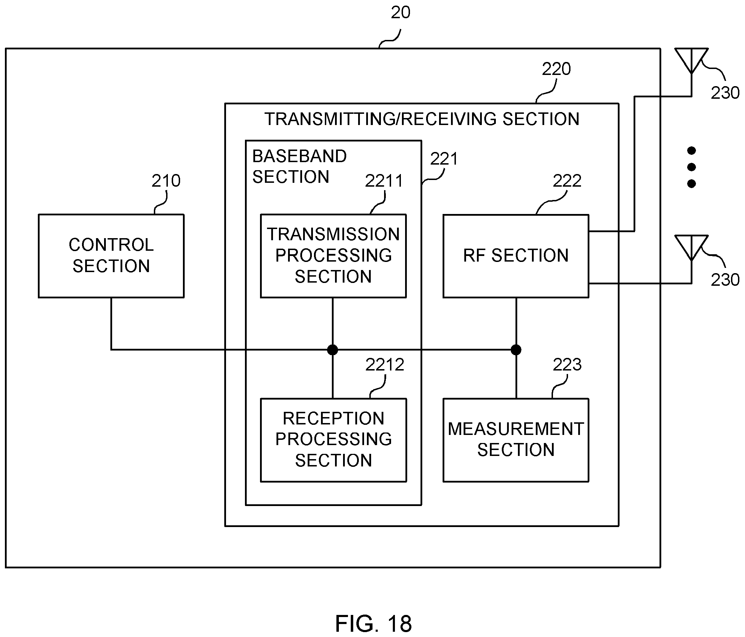

FIG. 18 is a diagram to show an example of a structure of a user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The transmitting/receiving section 220 may receive configuration information about a transmission configuration indication (TCI) state (for example, a common TCI state) applicable to multiple types of channels in one or more cells. The control section 210 may apply the TCI state to a secondary cell. The control section 210 may use, for a quasi co-location (QCL) type D (second QCL type) reference signal for the secondary cell, a first reference signal (QCL type D RS, SSB, CSI-RS, TRS) transmitted in a special cell (PCell/PSCell). When a second reference signal (RLM-RS or BFD-RS) for radio link monitoring (RLM) or beam failure detection (BFD) procedure is not configured for the secondary cell, the control section 210 may use the first reference signal for the procedure.

The configuration information may include an index indicating the first reference signal, and may not include an index indicating a cell in which the first reference signal is transmitted.

The configuration information may include an index indicating the special cell and an index indicating the first reference signal.

The configuration information may include an index indicating a cell other than the special cell and an index indicating a reference signal transmitted in a cell other than the special cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

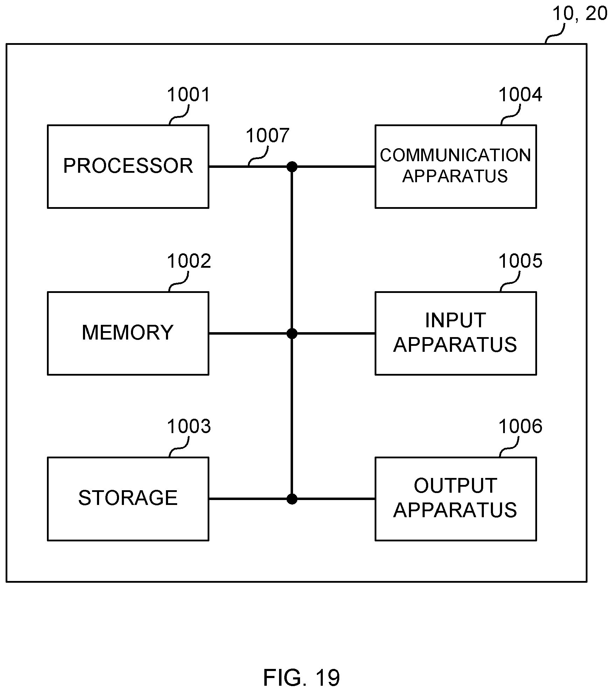

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives configuration information about a transmission configuration indication (TCI) state applicable to multiple types of channels in one or more cells; and
a control section that applies the TCI state to a secondary cell, wherein
the control section uses, for a quasi co-location (QCL) type D reference signal for the secondary cell, a first reference signal transmitted in a special cell, and
when a second reference signal for a procedure of radio link monitoring (RLM) or beam failure detection (BFD) is not configured for the secondary cell, the control section uses the first reference signal for the procedure.

2. The terminal according to claim 1, wherein
the configuration information includes an index indicating the first reference signal, and does not include an index indicating a cell in which the first reference signal is transmitted.

3. The terminal according to claim 1, wherein
the configuration information includes an index indicating the special cell and an index indicating the first reference signal.

4. The terminal according to claim 1, wherein
the configuration information includes an index indicating a cell other than the special cell and an index indicating a reference signal transmitted in a cell other than the special cell.

5. A radio communication method for a terminal comprising:
receiving configuration information about a transmission configuration indication (TCI) state applicable to multiple types of channels in one or more cells; and
applying the TCI state to a secondary cell, wherein
a first reference signal transmitted in a special cell is used for a quasi co-location (QCL) type D reference signal for the secondary cell, and
when a second reference signal for a procedure of radio link monitoring (RLM) or beam failure detection (BFD) is not configured for the secondary cell, the first reference signal is used for the procedure.

6. A base station comprising:
a transmitting section that transmits configuration information about a transmission configuration indication (TCI) state applicable to multiple types of channels in one or more cells; and
a control section that applies the TCI state to a secondary cell, wherein
a first reference signal transmitted in a special cell is used for a quasi co-location (QCL) type D reference signal for the secondary cell, and
when a second reference signal for a procedure of radio link monitoring (RLM) or beam failure detection (BFD) is not configured for the secondary cell, the first reference signal is used for the procedure.
